# EUROPEAN PATENT APPLICATION

(11) **EP 4 629 726 A1**
(43) Date of publication of application: **08.10.2025**
(21) Application number: 23910408.6
(22) Date of filing: 22.12.2023
(51) Int. Cl.: H04W 72/12, H04W 88/04, H04W 52/02

(54) **SIDELINK COMMUNICATION METHOD AND APPARATUS**

(30) Priority: 30.12.2022 CN 202211721770
(71) Applicant: Huawei Technologies Co., Ltd., Shenzhen, Guangdong 518129 (CN)
(72) Inventor: YE, Kuan, Shenzhen, Guangdong 518129 (CN); LI, Xiangyu, Shenzhen, Guangdong 518129 (CN); PENG, Wenjie, Shenzhen, Guangdong 518129 (CN); WANG, Rui, Shenzhen, Guangdong 518129 (CN)
(74) Representative: Thun, Clemens
(86) International application number: PCT/CN2023/141093
(87) International publication number: WO 2024/140482

(57) **Abstract**

This application provides a sidelink communication method and an apparatus, which can be applied to a U2U relay communication scenario, and reduce energy consumption of a terminal device. The method includes: A first terminal device sends a first request message to a second terminal device, where the first request message is used to request to establish an end-to-end unicast connection between the first terminal device and a third terminal device. After sending the first request message, the first terminal device remains in a state that is before the sending of the first request message. Alternatively, the first terminal device remains in an active state until a first message is received, a second message is sent, or a connection establishment procedure is stopped by an upper layer.

## Description

This application claims priority to Chinese Patent Application No. 202211721770.6, filed with the China National Intellectual Property Administration on December 30, 2022 and entitled "SIDELINK COMMUNICATION METHOD AND APPARATUS ", which is incorporated herein by reference in its entirety.

### TECHNICAL FIELD

This application relates to the field of sidelink communication, and more specifically, to a sidelink communication method and an apparatus.

### BACKGROUND

In a user equipment (user equipment, UE)-to-user equipment (UE-to-UE, U2U) relay (relay) scenario, a transmit-end UE (also referred to as a source UE, source UE) and a receive-end UE (also referred to as a target UE, target UE) each need to maintain two unicast connections: a hop-by-hop (hop-by-hop) unicast connection between the transmit-end UE or the receive-end UE and the relay UE, and an end-to-end (End-to-End, E2E) unicast connection. In a sidelink (sidelink, SL) discontinuous reception (discontinuous reception, DRX) communication mechanism defined in a current R17 protocol, when the E2E unicast connection between sending and receiving is established, the transmit-end UE and the receive-end UE cannot send, to each other, a message carrying an initial DRX configuration, and therefore always remain in an active (active) state. Therefore, how to enable an SL DRX communication mechanism in the U2U relay scenario is a problem that needs to be resolved.

### SUMMARY

This application provides a sidelink communication method and an apparatus. When an end-to-end unicast connection is established in a U2U relay communication scenario, a terminal device maintains an original DRX configuration or a terminal device determines a deadline of an active state, to reduce energy consumption of the terminal device.

According to a first aspect, an embodiment of this application provides a sidelink communication method. The method may be performed by a first terminal device or a component (for example, a chip or a chip system) of the first terminal device. This is not limited in this application. The method includes: The first terminal device sends a first request message to a second terminal device. The first request message is used to request to establish a first unicast connection, and the first unicast connection is an end-to-end unicast connection between the first terminal device and a third terminal device. The first terminal device remains in a state that is before the sending of the first request message. Alternatively, the first terminal device remains in an active state until a first message is received, a second message is sent, or a connection establishment procedure is stopped by an upper layer.

Based on the foregoing solution, when an end-to-end unicast connection is established in a U2U relay communication scenario, the first terminal device remains in the state that is before the sending of the first request message, or remains in the active state until the first message is received, the second message is sent, or the connection establishment procedure is stopped by the upper layer. In comparison with a conventional technology in which the first terminal device always remains in the active state, in the solution provided in this application, energy consumption of the first terminal device can be reduced.

With reference to the first aspect, in some implementations of the first aspect, that the first terminal device remains in the state that is before the sending of the first request message includes: The first terminal device maintains a discontinuous reception DRX configuration maintained before the sending of the first request message.

With reference to the first aspect, in some implementations of the first aspect, the method further includes: The first terminal device sends a second request message to the second terminal device. The second request message is used to request to establish a second unicast connection, and the second unicast connection is a unicast connection between the first terminal device and the second terminal device. The first terminal device receives a first response message from the second terminal device. The first response message indicates that the establishment of the second unicast connection is completed. The first terminal device remains in the active state until a radio resource control RRC message carrying an initial DRX configuration is received or a connection establishment procedure is stopped by the upper layer.

With reference to the first aspect, in some implementations of the first aspect, the second request message is before the first request message.

Based on this solution, the second terminal device that receives the first request message and the second request message can determine, based on receiving time of the request message, the unicast connection that the request message requests to establish, to ensure system stability.

With reference to the first aspect, in some implementations of the first aspect, the first message includes any one of the following:
a second response message forwarded by the second terminal device, where the second response message indicates that the establishment of the first unicast connection is completed; a first radio resource control RRC message from the second terminal device, where the first RRC message carries DRX configuration information of the second unicast connection; a second RRC message forwarded by the second terminal device, where the second RRC message carries service data adaptation protocol SDAP configuration information and packet data convergence protocol PDCP configuration information of the second unicast connection; a measurement report from the second terminal device, where the measurement report includes a channel busy ratio CBR of a third unicast connection, and the third unicast connection is a unicast connection between the second terminal device and the third terminal device; or a message that is from the second terminal device and that carries a quality of service QoS parameter.

Based on the foregoing solution, the terminal device receives the first message to introduce a deadline for stopping the active state by the terminal device, to reduce the energy consumption of the first terminal device.

With reference to the first aspect, in some implementations of the first aspect, the second message includes any one of the following: a third RRC message, where the third RRC message carries service data adaptation protocol SDAP configuration information and packet data convergence protocol PDCP configuration information of the first unicast connection; a message carrying a service QoS parameter; or a fourth RRC message, where the fourth RRC message carries a radio link control RLC bearer configuration of the second unicast connection.

Based on the foregoing solution, the terminal device sends the second message to introduce the deadline for stopping the active state by the terminal device, to reduce the energy consumption of the first terminal device.

With reference to the first aspect, in some implementations of the first aspect, the first request message is carried on a first channel, the first channel is associated with a first channel identifier, the first channel identifier is preset, the second request message is carried on a second channel, the second channel is associated with a second channel identifier, and the second channel identifier is preset.

Based on this solution, the second terminal device that receives the first request message and the second request message can determine, based on different channel identifiers, the unicast connection that the request message requests to establish, to ensure the system stability.

According to a second aspect, an embodiment of this application provides a sidelink communication method. The method may be performed by a second terminal device or a component (for example, a chip or a chip system) of the second terminal device. This is not limited in this application. The method includes: The second terminal device receives a first request message from a first terminal device. The first request message is used to request to establish a first unicast connection, and the first unicast connection is an end-to-end unicast connection between the first terminal device and a third terminal device. The second terminal device forwards the first request message to the third terminal device. The second terminal device remains in a state that is before the receiving of the first request message. Alternatively, the second terminal device remains in an active state until a first message is received, a second message is sent, or a connection establishment procedure is stopped by an upper layer.

With reference to the second aspect, in some implementations of the second aspect, that the second terminal device remains in the state that is before the receiving of the first request message includes: The second terminal device maintains a discontinuous reception DRX configuration maintained before the receiving of the first request message.

With reference to the second aspect, in some implementations of the second aspect, the method further includes: The second terminal device receives a second request message from the first terminal device. The second request message is used to request to establish a second unicast connection, and the second unicast connection is a unicast connection between the first terminal device and the second terminal device. The second terminal device sends a first response message to the first terminal device. The first response message indicates that the establishment of the second unicast connection is completed. The second terminal device remains in the active state until an RRC message carrying an initial DRX configuration is received or a connection establishment procedure is stopped by the upper layer. The second terminal device sends a third request message to the third terminal device. The third request message is used to request to establish a third unicast connection, and the third unicast connection is a unicast connection between the second terminal device and the third terminal device. The second terminal device receives a second response message from the third terminal device. The second response message indicates that the establishment of the second unicast connection is completed.

With reference to the second aspect, in some implementations of the second aspect, the second request message is before the first request message.

With reference to the second aspect, in some implementations of the second aspect, the first message includes any one of the following: a first radio resource control RRC message from the first terminal device, where the first RRC message carries discontinuous reception DRX configuration information of the second unicast connection; a second RRC message from the third terminal device, where the second RRC message carries DRX configuration information of the third unicast connection; a message that is from the first terminal device and that carries a QoS parameter of the second unicast connection; or a message that is from the third terminal device and that carries a QoS parameter of the third unicast connection.

With reference to the second aspect, in some implementations of the second aspect, the second message includes any one of the following: a measurement report, where the measurement report is a channel busy ratio CBR of the third unicast connection; a message carrying a QoS parameter; or a third RRC message, where the third RRC message carries a radio link control RLC bearer configuration of the second unicast connection.

With reference to the second aspect, in some implementations of the second aspect, the first request message is carried on a first channel, the first channel is associated with a first channel identifier, the first channel identifier is preset, the third request message is carried on a second channel, the second channel is associated with a second channel identifier, and the second channel identifier is preset.

According to a third aspect, an embodiment of this application provides a sidelink communication method. The method may be performed by a third terminal device or a component (for example, a chip or a chip system) of the third terminal device. This is not limited in this application. The method includes: The third terminal device receives a first request message from a second terminal device. The first request message is used to request to establish a first unicast connection. The third terminal device remains in a state that is before the receiving of the first request message. Alternatively, the third terminal device remains in an active state until a first message is received, a second message is sent, or a connection establishment procedure is stopped by an upper layer.

With reference to the third aspect, in some implementations of the third aspect, that the third terminal device remains in the state that is before the receiving of the first request message includes: The third terminal device maintains a discontinuous reception DRX configuration maintained before the receiving of the first request message.

With reference to the third aspect, in some implementations of the third aspect, the method further includes: The third terminal device receives a second request message from the second terminal device. The second request message is used to request to establish a second unicast connection, and the second unicast connection is a unicast connection between the first terminal device and the second terminal device. The third terminal device sends a first response message to the second terminal device. The first response message indicates that the establishment of the second unicast connection is completed. The third terminal device remains in the active state until an RRC message carrying an initial DRX configuration is received or a connection establishment procedure is stopped by the upper layer.

With reference to the third aspect, in some implementations of the third aspect, the second request message is before the first request message.

With reference to the third aspect, in some implementations of the third aspect, the first message includes any one of the following: a first radio resource control RRC message from the second terminal device, where the first RRC message carries discontinuous reception DRX configuration information of the second unicast connection; a second RRC message forwarded by the second terminal device, where the second RRC message carries service data adaptation protocol SDAP configuration information and packet data convergence protocol PDCP configuration information of the second unicast connection; a measurement report from the second terminal device, where the measurement report is a channel busy ratio CBR of a third unicast connection, and the third unicast connection is a unicast connection between the first terminal device and the second terminal device; or a message that is from the second terminal device and that carries a QoS parameter.

With reference to the third aspect, in some implementations of the third aspect, the second message includes any one of the following: a second response message, where the second response message indicates that the establishment of the first unicast connection is completed; a third RRC message, where the third RRC message carries service data adaptation protocol SDAP configuration information and packet data convergence protocol PDCP configuration information of the first unicast connection; a message carrying a QoS parameter; or a fourth RRC message, where the fourth RRC message carries a radio link control RLC bearer configuration of the second unicast connection.

With reference to the third aspect, in some implementations of the third aspect, the first request message is carried on a first channel, the first channel is associated with a first channel identifier, the first channel identifier is preset, the second request message is carried on a second channel, the second channel is associated with a second channel identifier, and the second channel identifier is preset.

According to a fourth aspect, an embodiment of this application provides a sidelink communication system. The system includes a first terminal device, at least one second terminal device, and at least one third terminal device. The first terminal device is configured to perform the method provided in any one of the first aspect and the implementations of the first aspect, the second terminal device is configured to perform the method provided in any one of the second aspect and the implementations of the second aspect, and the third terminal device is configured to perform the method provided in any one of the third aspect and the implementations of the third aspect.

According to a fifth aspect, an embodiment of this application provides a sidelink communication apparatus. The apparatus is configured to perform the method provided in the first aspect. Specifically, the communication may include units and/or modules, for example, a processing unit and an obtaining unit, configured to perform the method provided in any one of the first aspect or the foregoing implementations of the first aspect.

In an implementation, the sidelink communication apparatus is a first terminal device. The obtaining unit may be a transceiver or an input/output interface. The processing unit may be at least one processor. Optionally, the transceiver may be a transceiver circuit. Optionally, the input/output interface may be an input/output circuit.

In another implementation, the sidelink communication apparatus is a chip, a chip system, or a circuit in the first terminal device. The obtaining unit may be an input/output interface, an interface circuit, an output circuit, an input circuit, a pin, a related circuit, or the like on the chip, the chip system, or the circuit. The processing unit may be at least one processor, a processing circuit, a logic circuit, or the like.

According to a sixth aspect, an embodiment of this application provides a sidelink communication apparatus. The apparatus is configured to perform the method provided in the second aspect. Specifically, the communication may include units and/or modules, for example, a processing unit and an obtaining unit, configured to perform the method provided in any one of the second aspect or the foregoing implementations of the second aspect.

In an implementation, the sidelink communication apparatus is a second terminal device. The obtaining unit may be a transceiver or an input/output interface. The processing unit may be at least one processor. Optionally, the transceiver may be a transceiver circuit. Optionally, the input/output interface may be an input/output circuit.

In another implementation, the sidelink communication apparatus is a chip, a chip system, or a circuit in the second terminal device. The obtaining unit may be an input/output interface, an interface circuit, an output circuit, an input circuit, a pin, a related circuit, or the like on the chip, the chip system, or the circuit. The processing unit may be at least one processor, a processing circuit, a logic circuit, or the like.

According to a seventh aspect, an embodiment of this application provides a sidelink communication apparatus. The apparatus is configured to perform the method provided in the third aspect. Specifically, the communication may include units and/or modules, for example, a processing unit and an obtaining unit, configured to perform the method provided in any one of the third aspect or the foregoing implementations of the third aspect.

In an implementation, the sidelink communication apparatus is a third terminal device. The obtaining unit may be a transceiver or an input/output interface. The processing unit may be at least one processor. Optionally, the transceiver may be a transceiver circuit. Optionally, the input/output interface may be an input/output circuit.

In another implementation, the sidelink communication apparatus is a chip, a chip system, or a circuit in the third terminal device. The obtaining unit may be an input/output interface, an interface circuit, an output circuit, an input circuit, a pin, a related circuit, or the like on the chip, the chip system, or the circuit. The processing unit may be at least one processor, a processing circuit, a logic circuit, or the like.

According to an eighth aspect, an embodiment of this application provides a processor, configured to perform the methods provided in the foregoing aspects.

Unless otherwise specified, or if operations such as sending, and obtaining/receiving related to the processor do not contradict an actual function or internal logic of the operations in related descriptions, the operations may be understood as operations such as outputting, receiving, and inputting of the processor, or operations such as sending and receiving performed by a radio frequency circuit and an antenna. This is not limited in this application.

According to a ninth aspect, an embodiment of this application provides a computer-readable storage medium. The computer-readable storage medium stores program code executed by a device, and the program code is used to perform the method provided in any one of the first aspect, the second aspect, or the third aspect, and the implementations of the first aspect, the second aspect, or the third aspect.

According to a tenth aspect, an embodiment of this application provides a computer program product including instructions. When the computer program product runs on a computer, the computer is enabled to perform the method provided in any one of the first aspect, the second aspect, or the third aspect, and the implementations of the first aspect, the second aspect, or the third aspect.

According to an eleventh aspect, an embodiment of this application provides a chip. The chip includes a processor and a communication interface, and the processor reads, through the communication interface, instructions stored in a memory, to perform the method provided in any one of the first aspect, the second aspect, or the third aspect, and the implementations of the first aspect, the second aspect, or the third aspect.

Optionally, in an implementation, the chip further includes a memory, the memory stores a computer program or instructions, and the processor is configured to execute the computer program or the instructions stored in the memory. When the computer program or the instructions are executed, the processor is configured to perform the method provided in any one of the first aspect, the second aspect, or the third aspect, and the implementations of the first aspect, the second aspect, or the third aspect.

According to a twelfth aspect, an embodiment of this application provides a sidelink communication system, including the sidelink communication apparatus according to the fourth aspect, the sidelink communication apparatus according to the fifth aspect, and the sidelink communication apparatus according to the sixth aspect.

For specific beneficial effects brought by the second aspect to the twelfth aspect, refer to descriptions of the beneficial effects in the first aspect. Details are not described herein again.

### BRIEF DESCRIPTION OF DRAWINGS

FIG. 1 is a diagram of a U2U relay communication scenario to which this application is applicable;
FIG. 2 is a diagram of an SL communication scenario to which this application is applicable;
FIG. 3 is a diagram of a control plane protocol stack of SL communication;
FIG. 4 is a diagram of a user plane protocol stack of SL communication;
FIG. 5 is a diagram of a U2U relay communication architecture;
FIG. 6 is a diagram of a user plane protocol stack in an L3 relay manner;
FIG. 7 is a diagram of a user plane protocol stack in an L2 relay manner;
FIG. 8 is a schematic flowchart of a sidelink communication method 800 according to an embodiment of this application;
FIG. 9 is a schematic flowchart of a sidelink communication method 900 according to an embodiment of this application;
FIG. 10 is a schematic flowchart of a sidelink communication method 1000 according to an embodiment of this application;
FIG. 11 is a schematic flowchart of a sidelink communication method 1100 according to an embodiment of this application;
FIG. 12 is a schematic flowchart of a sidelink communication method 1200 according to an embodiment of this application;
FIG. 13 is a schematic flowchart of a sidelink communication method 1300 according to an embodiment of this application;
FIG. 14 is a block diagram of a sidelink communication apparatus 1400 according to an embodiment of this application;
FIG. 15 is a diagram of a structure of another sidelink communication apparatus according to an embodiment of this application; and
FIG. 16 is a diagram of a structure of an example of a first terminal device, a second terminal device, or a third terminal device according to an embodiment of this application.

### DESCRIPTION OF EMBODIMENTS

The following describes technical solutions in this application with reference to the accompanying drawings.

The technical solutions provided in this application may be applied to various communication systems, for example, a 5th generation (5th generation, 5G) or a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation (6th generation, 6G) mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine-type communication (machine-type communication, MTC), an internet of things (internet of things, IoT) communication system, or another communication system.

In an example, the V2X communication may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, and vehicle-to-network (vehicle-to-network, V2N) communication. V2V is communication between vehicles. V2P is communication between a vehicle and a person (including a pedestrian, a bicycle rider, a driver, a passenger, or the like). V2I is communication between a vehicle and an infrastructure. The infrastructure is, for example, a road side unit (road side unit, RSU) or a network device. The RSU includes two types: a terminal-type RSU and a base station-type RSU. Because the terminal-type RSU is deployed on a road side, the terminal-type RSU is in a non-mobile state, and mobility does not need to be considered. The base station-type RSU may provide timing synchronization and resource scheduling for a vehicle that communicates with the base station-type RSU. V2N is communication between a vehicle and a network device. It may be understood that the foregoing descriptions are examples, and are not limited in embodiments of this application. For example, V2X may further include NR system-based V2X communication in current 3GPP Rel-16 and later releases.

In an example: The D2D communication may include communication between a programmable logic controller (programmable logic controller, PLC) and a subordinate device of the programmable logic controller, for example, communication between the PLC and a sensor, or communication between the PLC and an actuator. The sensor may be, for example, a pressure sensor or a temperature sensor. The actuator may be, for example, a valve terminal or a heater. For example, the PLC receives, in each periodicity, data measured by all sensors, and sends an execution instruction to the actuator in each periodicity.

A terminal device in embodiments of this application may also be referred to as a user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data for a user, for example, a handheld device or a vehicle-mounted device having a wireless connection function. Currently, some examples of the terminal are a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a wearable device, a terminal device in a 5G network, a terminal device in a future evolved public land mobile network (public land mobile network, PLMN), or the like. This is not limited in embodiments of this application.

By way of example, and not limitation, in embodiments of this application, the terminal device may alternatively be a wearable device. The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that is directly worn on a body or integrated into clothes or an accessory of a user. The wearable device is not only a hardware device, but also implements a powerful function through software support, data exchange, and cloud interaction. In a broad sense, wearable intelligent devices include full-featured and large-size devices that can implement complete or partial functions without depending on smartphones such as smart watches or smart glasses, and include devices that focus on only one type of application function and need to work with other devices such as smartphones, for example, various smart bands or smart jewelry for monitoring physical signs.

In embodiments of this application, an apparatus configured to implement a function of the terminal device may be a terminal device, or may be an apparatus, for example, a chip system or a chip, that can support the terminal device in implementing the function. The apparatus may be installed in the terminal device. In embodiments of this application, the chip system may include a chip, or may include a chip and another discrete component.

The network device in embodiments of this application may be a device configured to communicate with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may cover the following various names in a broad sense, or may be replaced with the following names, for example, a NodeB (NodeB), an evolved NodeB (evolved NodeB, eNB), a next generation NodeB (next generation NodeB, gNB), a relay station, an access point, a transmission reception point (transmission reception point, TRP), a transmitting point (transmitting point, TP), a primary station, a secondary station, a multi-standard radio (multi-standard radio, MSR) node, a home base station, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, or the like, or a combination thereof. The base station may alternatively be a communication module, a modem, or a chip that is disposed in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks of a same access technology or different access technologies. A specific technology and a specific device form that are used by the network device are not limited in embodiments of this application.

The base station may be fixed or mobile. For example, a helicopter or an uncrewed aerial vehicle may be configured as a mobile base station, and one or more cells may move based on a position of the mobile base station. In another example, a helicopter or an uncrewed aerial vehicle may be configured as a device for communicating with another base station.

In some deployments, the network device mentioned in embodiments of this application may be a device including a CU or a DU, a device including a CU and a DU, or a device including a control plane CU node (a central unit-control plane (central unit-control plane, CU-CP)), a user plane CU node (a central unit-user plane (central unit-user plane, CU-UP)), and a DU node.

**In** embodiments of this application, an apparatus configured to implement a function of the network device may be a network device, or may be an apparatus, for example, a chip system or a chip, that can support the network device in implementing the function. The apparatus may be installed in the network device. In embodiments of this application, the chip system may include a chip, or may include a chip and another discrete component.

The network device and the terminal device may be deployed on land, including indoor or outdoor devices, handheld devices, or vehicle-mounted devices; may be deployed on water; or may be deployed on an airplane, a balloon, and a satellite in the air. Scenarios in which the network device and the terminal device are located are not limited in embodiments of this application.

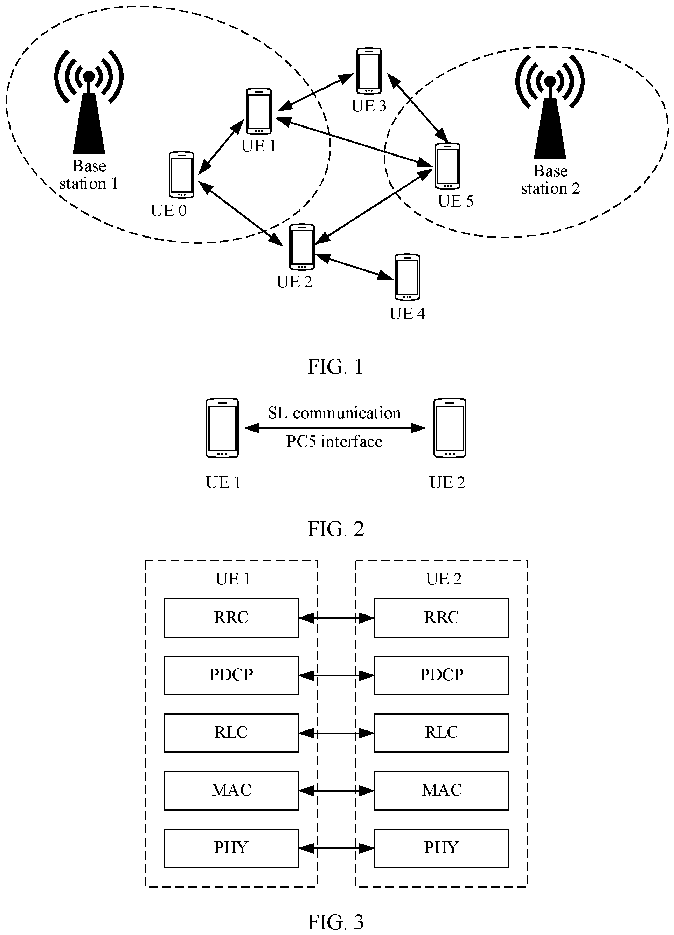

First, a communication system applicable to embodiments of this application is briefly described with reference to FIG. 1. FIG. 1 shows a U2U relay communication scenario to which this application is applicable. In a U2U relay scenario, SL communication is supported between UEs. Based on an SL communication protocol, the UEs may directly communicate with each other, or communicate with each other through one-hop or multi-hop relay. For example, a UE 0 in the figure may communicate with a UE 5 through relay of a UE 1 and a UE 3, or communicate with a UE 5 through relay of a UE 2 and a UE 4. SL-based unicast communication, SL-based multicast communication, and SL-based broadcast communication are supported between the UEs. The UE may be located in a coverage area of a network, or may be located outside a coverage area of a network. All UEs may be located in a coverage area of a cell of a same base station, or may be located in coverage areas of different cells of different base stations. When the UE is in a coverage area of the base station, the UE may be in a radio resource control (radio resource control, RRC) connected state, idle state, or inactive state. When the UE is outside a coverage area of the base station, it is also referred to as an out of coverage (out of coverage, OOC) state.

It may be understood that FIG. 1 is merely a simplified diagram of an example for ease of understanding. The wireless communication system may further include another network device or may further include another terminal device, which is not shown in FIG. 1. Embodiments of this application are applicable to any communication scenario in which a transmit-end device communicates with a receive-end device.

For ease of understanding embodiments of this application, the following briefly describes several terms in this application.

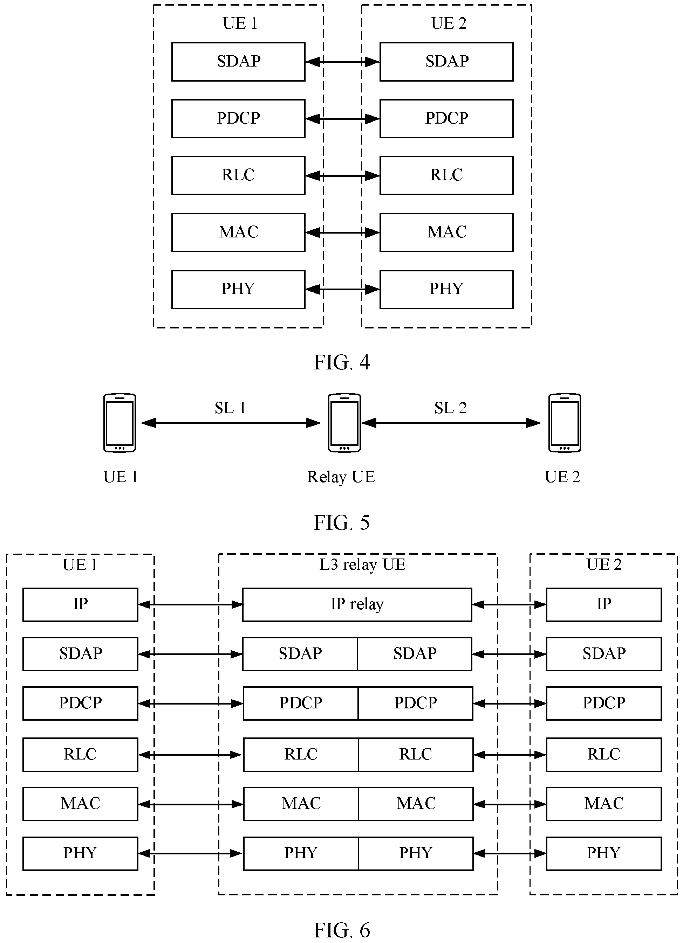

1. SL communication: In a wireless communication system, data communication between UEs may be performed through a network, or communication between UEs may be directly performed without using a network device, as shown in FIG. 2. An interface between the UEs is referred to as a PC5 interface, similar to a Uu interface between the UE and a base station. A link between the UEs is referred to as an SL, and a typical application scenario of SL communication is V2X. In V2X, each vehicle is one UE, and data transmission between the UEs may be directly performed through the SL but not through the network. In this way, a communication delay can be effectively reduced. A control plane protocol stack of SL communication is shown in FIG. 3, and includes an RRC layer, a packet data convergence protocol (packet data convergence protocol, PDCP) layer, a radio link control (radio link control, RLC) layer, a media access control (media access control, MAC) layer, and a physical layer (physical layer, PHY). A user plane protocol stack is shown in FIG. 4, and sequentially includes a service data adaptation protocol (service data adaptation protocol, SDAP) layer, a PDCP layer, an RLC layer, a MAC layer, and a PHY layer from top to bottom.

In an SL communication process, a pair of a source (source) layer-2 identifier (layer-2 identifier, L2 ID) and a destination (destination) L2 ID is used to identify a source UE and a destination UE in the communication process. The SL supports three communication manners: broadcast, unicast, and multicast.

SL broadcast communication is similar to broadcasting by a base station. To be specific, the UE sends data of a broadcast service to the outside without encrypting the data. Any other UE in an effective receiving range may receive the data of the broadcast service if the UE is interested in the broadcast service.

In unicast communication, a unicast connection needs to be first established between two UEs. After the unicast connection is established, the two UEs may perform data communication based on a negotiated identifier. The data may be encrypted, or may not be encrypted. In comparison with broadcast communication, the unicast communication can be performed only between two UEs that have established the unicast connection.

Multicast communication is communication between all UEs in a communication group, and any UE in the group can receive and send data of a multicast service in the group.

In the SL communication process, regardless of unicast, multicast, or broadcast, a sending UE includes the source L2 ID and the destination L2 ID in a subheader of each SL MAC data protocol unit (protocol data unit, PDU), so that data is transmitted from a transmit end to a correct receive end.

The source L2 ID is allocated by the transmit-end UE. The transmit-end UE selects different source L2 IDs based on different communication types (unicast, multicast, or broadcast) and standards (LTE or NR). If privacy protection is needed for an SL service type (service type) of the UE, to avoid tracking and identification by another UE, the source UE further needs to periodically update the source L2 ID. The destination L2 ID depends on a service type. A correspondence between the destination L2 ID and the broadcast/multicast/unicast service is defined through pre-configuration, an application layer server, a core network configuration, or the like. In a broadcast/multicast communication process, the transmit-end UE (or referred to as the source UE) determines a corresponding destination L2 ID based on a broadcast/multicast service type, and the destination L2 ID is predefined in a protocol. In a unicast communication process, the source UE first needs to establish a unicast connection to the destination UE. In a unicast connection establishment process, the transmit-end UE first selects a default (default) destination L2 ID, and the default destination L2 ID is related to a service type of unicast communication. After the unicast connection is established, the source UE continues to perform unicast communication by using the default destination L2 ID.

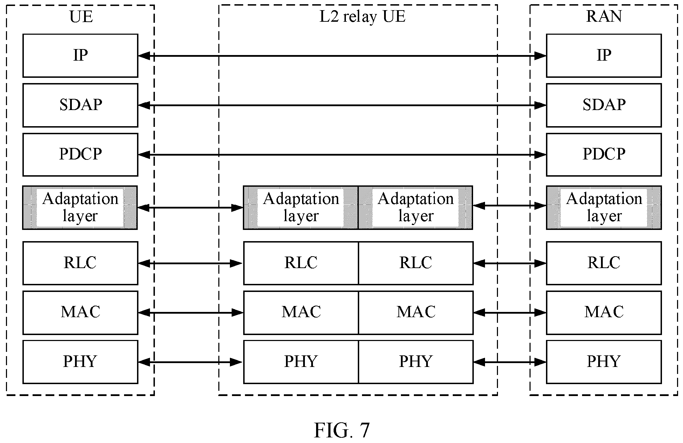

2. U2U relay: When UEs directly communicate with each other through an SL, a communication distance is not very long due to an insufficient hardware capability of a transmit-side UE or the like. Consequently, a scenario in which the UEs communicate with each other through the SL is limited. To expand an SL communication range, the U2U relay is introduced in research. A communication architecture of the U2U relay is shown in FIG. 5. In a U2U relay communication scenario, there is one transmit-side UE (source UE, for example, a UE 1 in FIG. 5), one or more target UEs (target UE, for example, a UE 2 in FIG. 5), and one or more relay UEs. Currently, there are two implementations of the U2U relay. A first implementation is a layer 3 (layer 3, L3) relay manner and a layer 2 (layer 2, L2) relay manner. In the L3 relay manner, user plane data is relayed and forwarded at an internet protocol (internet protocol, IP) layer. A corresponding user plane protocol stack is shown in FIG. 6. When a data packet sent by the UE 1 to the UE 2 is relayed by the relay UE, the relay UE needs to parse the data packet to the IP layer, and determine, based on information such as an IP address, the destination end UE 2 to which the data packet is forwarded. In the L2 relay manner, user plane data is relayed and forwarded below a PDCP layer on the relay UE side. A diagram of a user plane protocol stack is shown in FIG. 7. In the protocol architecture, an adaptation layer (adaptation layer) is added between an RLC layer and the PDCP layer. A main function of the adaptation layer is bearer multiplexing and demultiplexing. To be specific, the adaptation layer supports multiplexing of different bearers onto one RLC bearer or splitting of radio bearer data multiplexed on one RLC bearer. When the transmit-side UE communicates with a plurality of receive-side UEs through one relay UE, to distinguish between data of different receive-side UEs, a local identifier (local ID) needs to be allocated to each receive-side UE, and the ID needs to be carried in a data packet routing process, to indicate which receive-side UE the data belongs to.

3. Discontinuous reception DRX: In the method, a terminal may periodically enter a sleep mode (sleep mode) at some time, and does not monitor a physical downlink control channel. When the terminal needs to monitor the physical downlink control channel, the terminal wakes up (wake up) from the sleep mode. In this way, the terminal can save power. Although this affects a data transmission delay to some extent, it is meaningful to perform DRX if a power consumption status of the terminal needs to be considered.

In a typical DRX cycle, a time period in which the terminal is in a wake-up state and that belongs to "active time" is time in which the terminal monitors the physical downlink control channel. Time in which the terminal enters sleep to save power and does not monitor the physical downlink control channel belongs to "sleep time". It should be understood that longer DRX sleep time indicates lower power consumption of the terminal, but correspondingly, a service transmission delay also increases.

Currently, in a U2U relay scenario, a source UE and a destination UE each maintain two unicast connections: a hop-by-hop unicast connection to a relay UE and an end-to-end unicast connection to each other. In an SL DRX mechanism defined in R17, when a direct communication request (direct communication request, DCR) message for establishing the end-to-end unicast connection is sent and received, the source UE and the destination UE remain in an active state. However, on the end-to-end unicast connection, the source UE and the destination UE cannot send SL DRX configurations to each other. Consequently, the source UE and the destination UE always remain in the active state.

In view of this, this application provides a sidelink communication method and an apparatus, to enable an SL DRX communication mechanism in a U2U relay scenario, and reduce energy consumption of a terminal device.

The following describes in detail the sidelink communication method provided in this application with reference to the accompanying drawings. In a U2U relay wireless communication system, there is one initiating terminal device (also referred to as a source UE), at least one receiving terminal device (also referred to as a destination UE), and one or more relay terminal devices between the initiating terminal device and the at least one receiving terminal device. The following uses an interaction process between one initiating terminal device, one receiving terminal device, and one relay terminal device as an example to describe in detail the sidelink communication method provided in embodiments of this application.

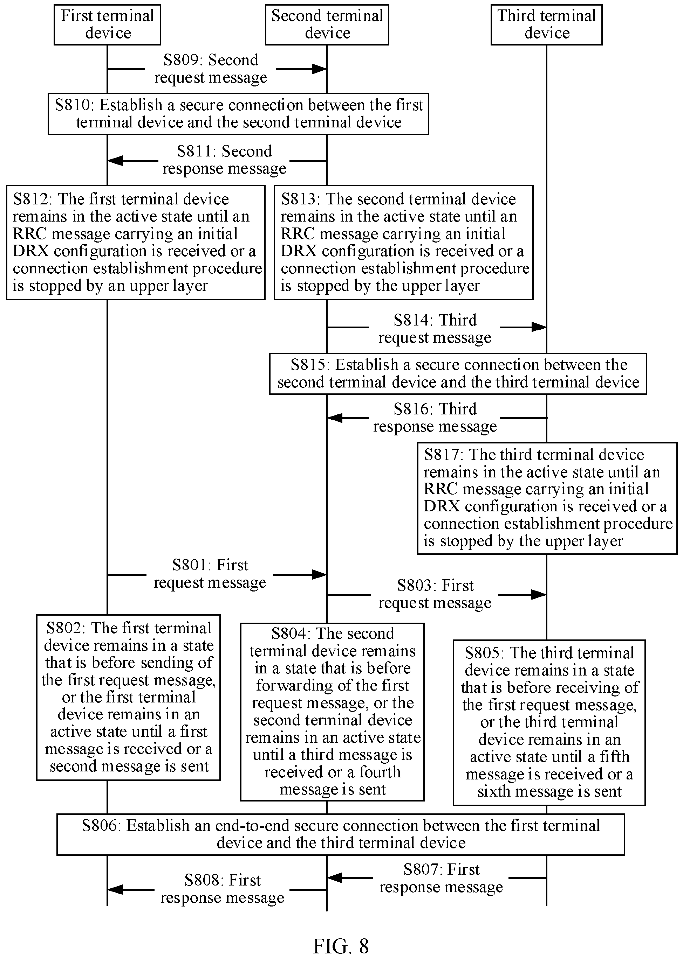

FIG. 8 is a schematic flowchart of a sidelink communication method 800 from a perspective of device interaction according to an embodiment of this application. The method 800 may include S801 to S805. The following describes in detail steps in the method 800.

S801: A first terminal device sends a first request message to a second terminal device.

Specifically, when the first terminal device needs to communicate with a third terminal device based on a service requirement, if the first terminal device finds, after triggering a discovery procedure, that a direct unicast connection cannot be established between the first terminal device and the third terminal device, the first terminal device selects the second terminal device as a relay to communicate with the third terminal device. In this case, the first terminal device sends the first request message to the second terminal device. The first request message is used to request to establish an end-to-end unicast connection between the first terminal device and the third terminal device. Correspondingly, the second terminal device receives the first request message.

In an implementation, the first request message sent by the first terminal device to the second terminal device is a first DCR message.

Optionally, the first request message includes a relay service code (relay service code, RSC), and a value of the RSC indicates that the first request message sent by the first terminal device to the second terminal device is used in a U2U relay wireless communication scenario.

Optionally, the first request message carries a sidelink relay adaptation protocol (sidelink relay adaptation protocol, SRAP) header. Correspondingly, after receiving the first request message, the second terminal device may determine, based on the SRAP header, that a current scenario is the U2U relay communication scenario, and may determine, based on bearer identifier (bearer ID) information in the SRAP header, that the first request message is used to request to establish the end-to-end unicast connection between the first terminal device and the third terminal device.

Optionally, the first request message further includes quality of service (quality of service, QoS) parameter information of the first terminal device. The QoS parameter information may be generated by the first terminal device based on a requirement of an application layer service, for example, may be a performance requirement parameter like a 5th generation sidelink QoS identifier (PC5 5G QoS Identifier, PQI), an allocation and retention priority (allocation and retention priority, ARP), or a guaranteed bit rate (guaranteed bit rate, GFBR).

S802: The first terminal device remains in a state that is before the sending of the first request message. Alternatively, the first terminal device remains in an active state until a first message is received, a second message is sent, or a connection establishment procedure is stopped by an upper layer. In an implementation, after sending the first request message, the first terminal device does not change a current state. In other words, before the first terminal device sends the first request message, if there is a DRX configuration, the first terminal device maintains the DRX configuration. In other words, the first terminal device maintains the DRX configuration maintained before the sending of the first request message. Alternatively, the first terminal device is in the active state before sending the first request message, and remains in the original active state after sending the first request message.

It should be understood that the DRX configuration that exists before the first terminal device sends the first request message is not a DRX configuration of the unicast connection between the first terminal device and the third terminal device, but a DRX configuration of another thread of the first terminal device. In other words, the first terminal device does not trigger a new DRX thread for the end-to-end unicast connection between the first terminal device and the third terminal device.

Alternatively, in another implementation, after sending the first request message, the first terminal device remains in the active state until the first message is received, the second message is sent, or the connection establishment procedure is stopped by the upper layer.

Specifically, the first message may include any one of the following messages:
a second response message forwarded by the second terminal device, where the second response message indicates that the establishment of the unicast connection between the first terminal device and the third terminal device is completed;
   or
a first radio resource control (radio resource control, RRC) message sent by the second terminal device, where the first RRC message carries DRX configuration information of a unicast connection between the first terminal device and the second terminal device;
   or
a second RRC message forwarded by the second terminal device, where the second RRC message carries service data adaptation protocol (service data adaptation protocol, SDAP) configuration information and packet data convergence protocol (packet data convergence protocol, PDCP) configuration information of the unicast connection between the first terminal device and the third terminal device;
   or
a measurement report sent by the second terminal device, where the measurement report includes a channel busy ratio (channel busy ratio, CBR) of the unicast connection between the second terminal device and the third terminal device;
   or
a message that is sent by the second terminal device and that carries a QoS parameter, where it should be noted that, when the QoS parameter is a QoS parameter of the end-to-end unicast connection between the first terminal device and the third terminal device, the message carrying the QoS parameter is from the third terminal device, and is forwarded by the second terminal device to the first terminal device; or when the QoS parameter is a QoS parameter of the unicast connection between the first terminal device and the second terminal device, the message carrying the QoS parameter is generated by the second terminal device and sent to the first terminal device.

In addition, it should be noted that, that the connection establishment procedure is stopped by the upper layer (upper layer) means that the establishment of the end-to-end unicast connection between the first terminal device and the third terminal device is stopped by a non-access stratum.

Specifically, the second message may include any one of the following messages:
a third RRC message, where the third RRC message carries the SDAP configuration information and the PDCP configuration information of the unicast connection between the first terminal device and the third terminal device;
   or
a message carrying a quality of service QoS parameter, where it should be noted that, when the QoS parameter is the QoS parameter of the end-to-end unicast connection between the first terminal device and the third terminal device, the message carrying the QoS parameter is sent by the second terminal device to the third terminal device; or when the QoS parameter is the QoS parameter of the unicast connection between the first terminal device and the second terminal device, the message carrying the QoS parameter is sent to the second terminal device;
   or
a fourth RRC message, where the fourth RRC message carries a radio link control (radio link control, RLC) bearer configuration of the unicast connection between the first terminal device and the second terminal device.

S803: The second terminal device forwards the first request message to the third terminal device.

Specifically, after receiving the first request message from the first terminal device, the second terminal device forwards the first request message to the third terminal device. Correspondingly, the third terminal device receives the first request message.

S804: The second terminal device remains in a state that is before the forwarding of the first request message. Alternatively, the second terminal device remains in an active state until a third message is received, a fourth message is sent, or a connection establishment procedure is stopped by the upper layer.

In an implementation, after forwarding the first request message, the second terminal device does not change a current state. In other words, before the second terminal device forwards the first request message, if there is a DRX configuration, the second terminal device maintains the DRX configuration. Alternatively, the second terminal device is in the active state before forwarding the first request message, and remains in the original active state after forwarding the first request message.

It should be understood that the DRX configuration that exists before the second terminal device forwards the first request message may be a DRX configuration of a unicast connection between the second terminal device and another terminal device.

Alternatively, in another implementation, after forwarding the first request message, the second terminal device remains in the active state until the third message is received, the fourth message is sent, or the connection establishment procedure is stopped by the upper layer.

Specifically, the third message includes any one of the following messages:
a fifth RRC message sent by the first terminal device, where the fifth RRC message carries the DRX configuration information of the unicast connection between the first terminal device and the second terminal device;
   or
a sixth RRC message sent by the third terminal device, where the sixth RRC message carries DRX configuration information of a unicast connection between the second terminal device and the third terminal device;
   or
a message that is sent by the first terminal device and that carries the QoS parameter of the end-to-end unicast connection between the first terminal device and the second terminal device;
   or
a message that is sent by the third terminal device and that carries a QoS parameter of a unicast connection between the second terminal device and the third terminal device.

Specifically, the fourth message includes at least one of the following:
a measurement report, where the measurement report is a CBR of the unicast connection between the first terminal device and the second terminal device;
   or
a message carrying a QoS parameter, where it should be noted that, when the QoS parameter is the QoS parameter of the end-to-end unicast connection between the first terminal device and the third terminal device, the message carrying the QoS parameter is forwarded by the second terminal device to the third terminal device; or when the QoS parameter is the QoS parameter of the unicast connection between the first terminal device and the second terminal device, the message carrying the QoS parameter is determined based on the QoS parameter of the end-to-end unicast connection between the first terminal device and the third terminal device, where for example, the second terminal device may split the QoS parameter of the end-to-end unicast connection between the first terminal device and the third terminal device, the QoS parameter of the unicast connection between the second terminal device and the first terminal device is obtained through splitting, and the QoS parameter of the unicast connection between the second terminal device and the first terminal device is sent to the first terminal device; or the second terminal device may split the QoS parameter of the end-to-end unicast connection between the first terminal device and the third terminal device, the QoS parameter of the unicast connection between the second terminal device and the third terminal device is obtained through splitting, and the QoS parameter of the unicast connection between the second terminal device and the third terminal device is sent to the third terminal device;
   or
a seventh RRC message, where the seventh RRC message carries the RLC bearer configuration of the unicast connection between the first terminal device and the second terminal device.

S805: The third terminal device remains in a state that is before the receiving of the first request message. Alternatively, the third terminal device remains in an active state until a fifth message is received, a sixth message is sent, or a connection establishment procedure is stopped by the upper layer.

In an implementation, after receiving the first request message forwarded by the second terminal device, the third terminal device does not change a current state. In other words, before the third terminal device receives the first request message, if there is a DRX configuration, the third terminal device maintains the DRX configuration. Alternatively, the third terminal device is in the active state before receiving the first request message, and remains in the original active state after receiving the first request message.

It should be understood that the DRX configuration that exists before the third terminal device receives the first request message may be a DRX configuration of a unicast connection between the third terminal device and another terminal device.

Alternatively, in another implementation, before receiving the first request message, the third terminal device remains in the active state until the fifth message is received, the sixth message is sent, or the connection establishment procedure is stopped by the upper layer.

Specifically, the fifth message includes at least one of the following:
an eighth RRC message sent by the second terminal device, where the eighth RRC message carries the end-to-end DRX configuration information between the second terminal device and the third terminal device;
   or
a ninth RRC message forwarded by the second terminal device, where the ninth RRC message carries the SDAP configuration information and the PDCP configuration information of the unicast connection between the first terminal device and the third terminal device;
   or
the measurement report sent by the second terminal device, where the measurement report includes the CBR of the unicast connection between the first terminal device and the second terminal device;
   or
a message that is sent by the second terminal device and that carries a QoS parameter, where it should be noted that, when the QoS parameter is the QoS parameter of the end-to-end unicast connection between the first terminal device and the third terminal device, the message carrying the QoS parameter is forwarded by the second terminal device to the third terminal device; or when the QoS parameter is the QoS parameter of the unicast connection between the second terminal device and the third terminal device, the message carrying the QoS parameter is determined based on the QoS parameter of the end-to-end unicast connection between the first terminal device and the third terminal device.

Specifically, the sixth message includes at least one of the following:
the second response message, where the second response message indicates that the establishment of the unicast connection between the first device and the third device is completed;
   or
a message carrying a quality of service QoS parameter, where the QoS parameter is the QoS parameter of the unicast connection between the first terminal device and the second terminal device, and the message carrying the QoS parameter is generated by the first terminal device and sent to the second terminal device;
   or
a tenth RRC message, where the tenth RRC message carries the SDAP configuration information and the PDCP configuration information of the unicast connection between the first terminal device and the third terminal device;
   or
an eleventh RRC message, where the eleventh RRC message carries an RLC bearer configuration of the unicast connection between the second terminal device and the third terminal device.

S806: Establish a secure connection between the first terminal device and the third terminal device.

Specifically, the process includes: The third terminal device sends a security mode command message to the first terminal via the second terminal device. The security mode command message indicates that the third terminal device requires the first terminal device to establish the secure connection. After receiving the security mode command message, the first terminal device sends a security mode complete message to the third terminal device via the second terminal device. The security mode complete message indicates that the establishment of the secure connection between the first terminal device and the third terminal device is completed. S807: The third terminal device sends a first response message to the second terminal device.

Specifically, after the establishment of the end-to-end secure connection between the first terminal device and the third terminal device is completed, the third terminal device sends the first response message to the second terminal device. The first response message indicates that the establishment of the end-to-end unicast connection between the first terminal device and the third terminal device is completed.

S807: The second terminal device forwards the first response message to the first terminal device.

Based on the foregoing solutions, according to the sidelink communication method provided in this embodiment of this application, when a terminal device establishes an end-to-end unicast connection, the terminal device remains in a current state or the terminal device stops an active state when receiving a specific message, so that an SL DRX communication mechanism is introduced in a U2U relay scenario, energy consumption of the terminal device is reduced, and power consumption of a system is reduced.

Optionally, the method 800 further includes a process of establishing a hop-by-hop unicast connection between the first terminal device and the second terminal device, and a process of establishing a hop-by-hop unicast connection between the second terminal device and the third terminal device. A process of establishing the two hop-by-hop unicast connections includes steps S809 to S817.

S809: The first terminal device sends a second request message to the second terminal device.

Specifically, before the first terminal device establishes the end-to-end unicast connection to the third terminal device, the hop-by-hop unicast connection needs to be established between the first terminal device and the second terminal device. Therefore, the first terminal device sends the second request message to the second terminal device. The second request message is used to request to establish the unicast connection between the first terminal device and the second terminal device. Correspondingly, the second terminal device receives the second request message.

S810: Establish a secure connection between the first terminal device and the second terminal device.

Specifically, the process includes: The second terminal device sends a security mode command message to the first terminal device. The security mode command message indicates that the second terminal device requires the first terminal device to establish the secure connection. After receiving the security mode command message, the first terminal device sends a security mode complete message to the second terminal device. The security mode complete message indicates that the establishment of the secure connection between the first terminal device and the second terminal device is completed. S811: The second terminal device sends a second response message to the first terminal device.

Specifically, after the establishment of the unicast connection between the first terminal device and the second terminal device is completed, the second terminal device sends the first response message to the first terminal device. The first response message indicates that the establishment of the unicast connection between the first terminal device and the second terminal device is completed.

S812: The first terminal device remains in the active state until an RRC message carrying an initial DRX configuration is received or a connection establishment procedure is stopped by the upper layer.

Specifically, after receiving the second response message sent by the second terminal device, the first terminal device determines that the hop-by-hop unicast connection to the second terminal device is successfully established. In this case, the first terminal device remains in the active state until the RRC message that is sent by the second terminal device and that carries the initial DRX configuration is received or the connection establishment procedure is stopped by the upper layer.

It should be noted that the initial DRX configuration is a DRX configuration of first interaction between the first terminal device and the second terminal device.

S813: The second terminal device remains in the active state until an RRC message carrying an initial DRX configuration is received or a connection establishment procedure is stopped by the upper layer.

Specifically, after the hop-by-hop unicast connection between the first terminal device and the second terminal device is successfully established, the second terminal device remains in the active state until the RRC message that is sent by the first terminal device and that carries the initial DRX configuration is received or the connection establishment procedure is stopped by the upper layer.

S814 to S817 are the process of establishing the hop-by-hop unicast connection between the second terminal device and the third terminal device. For the process, refer to the foregoing S809 to S812. Details are not described herein again.

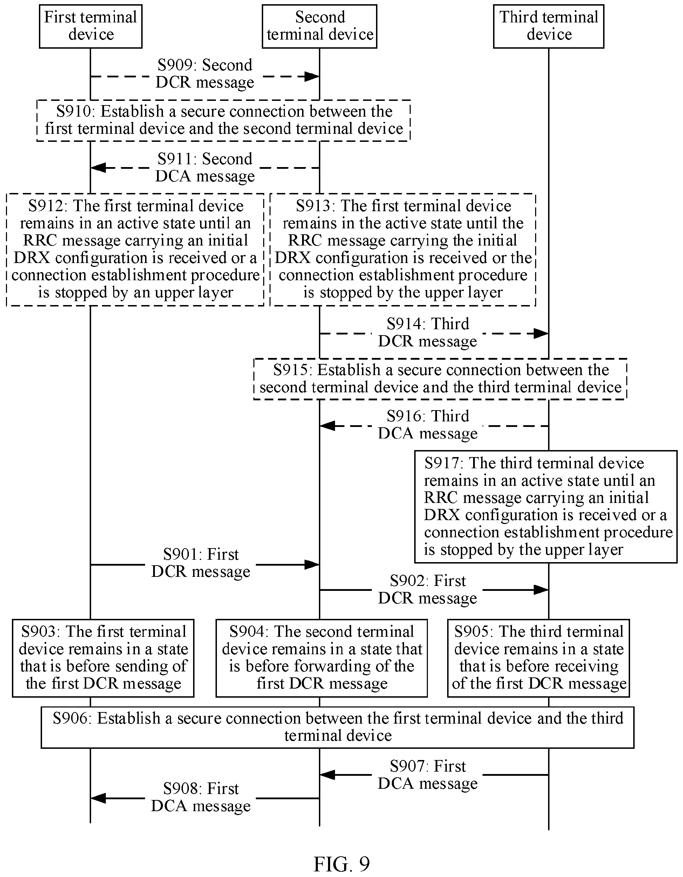

FIG. 9 is a schematic flowchart of a sidelink communication method 900 from a perspective of device interaction according to an embodiment of this application. The following describes in detail steps in the method 900.

It should be understood that the method 900 may be considered as an application in a case in which in the method 800, the first request message is a first DCR message, the first response message is a first direct communication acceptance (direct communication acceptance, DCA) message, the second request message is a second DCR message, the second response message is a second DCA message, a third request message is a third DCR message, and a third response message is a third DCA message. For simplicity of description, details are not described herein again.

It should be noted that, when a first terminal device needs to communicate with a third terminal device based on a service requirement, the first terminal device triggers a discovery procedure (for the discovery procedure, refer to a current related technology, and details are not described herein again). The first terminal device determines, by using the discovery procedure, that the first terminal device cannot perform direct connection unicast communication with the third terminal device. Therefore, the first terminal device selects a second terminal device as a relay terminal device to perform relay communication.

In an implementation, the first terminal device notifies the second terminal device that a current scenario is a U2U relay communication scenario by distinguishing between a hop-by-hop connection and an end-to-end unicast connection.

Specifically, the process includes the following steps.

S909: The first terminal device sends the second DCR message to the second terminal device.

Specifically, when the first terminal device determines to perform relay communication with the third terminal device through the second terminal device, the second DCR message carries an RSC, and the RSC indicates that the current scenario is the U2U relay communication scenario.

Optionally, the second DCR message carries user information identification information of the relay terminal device, and the user information identification information of the relay terminal device indicates that the second DCR message is used to establish a hop-by-hop unicast connection between the first terminal device and the second terminal device. Correspondingly, after receiving the second DCR message, the second terminal device may determine, based on the user information identification information of the relay terminal device carried in the second DCR message, that the current scenario is the U2U relay communication scenario.

Optionally, the second DCR message is carried on a second channel, the second channel is associated with a second channel identifier, and the second channel identifier is preset. It should be understood that "preset" means that the channel identifier is set by default or is specially configured in a protocol or the like. Correspondingly, after receiving the second DCR message, the second terminal device may determine, based on the second channel identifier, that the current scenario is the U2U relay communication scenario.

S910: Establish a secure connection between the first terminal device and the second terminal device.

S911: The second terminal device sends the second DCA message to the first terminal device.

For S912 and S913, refer to the foregoing S812 and S813 respectively. Details are not described herein again.

S914: The second terminal device sends the third DCR message to the third terminal device.

Specifically, when determining that the current scenario is the U2U relay communication scenario, the second terminal device sends the third DCR message to the third terminal device. The third DCR message is used to request to establish a hop-by-hop unicast connection between the second terminal device and the third terminal device. The third DCR message carries an RSC, and the RSC indicates that the current scenario is the U2U relay communication scenario. Correspondingly, after receiving the third DCR message, the third terminal device determines, based on the RSC, that the current scenario is the U2U relay communication scenario.

Optionally, the third DCR message carries the user information identification information of the relay terminal device, and the user information identification information of the relay terminal device indicates that the third DCR message is used to establish a hop-by-hop unicast connection between the second terminal device and the third terminal device. Correspondingly, after receiving the third DCR message, the third terminal device may determine, based on the user information identification information of the relay terminal device carried in the third DCR message, that the current scenario is the U2U relay communication scenario.

Optionally, the third DCR message is carried on a third channel, the third channel is associated with a third channel identifier, and the third channel identifier is preset. Correspondingly, after receiving the third DCR message, the third terminal device may determine, based on the third channel identifier, that the current scenario is the U2U relay communication scenario.

S914: Establish a secure connection between the second terminal device and the third terminal device.

S915: The third terminal device sends the third DCA message to the second terminal device.

For S917, refer to the foregoing S817. Details are not described herein again.

S901: The first terminal device sends the first DCR message to the second terminal device.

Specifically, after the establishment of the hop-by-hop unicast connection between the first terminal device and the second terminal device is completed, the first terminal device sends the first DCR message to the second terminal device, to request to establish an end-to-end unicast connection between the first terminal device and the third terminal device. Correspondingly, the second terminal device receives the first DCR message. Because the first DCR message is a 2^{nd} DCR message after the second DCR message, the second terminal device may determine, based on a time sequence of receiving the first DCR message and the second DCR message, that the first DCR message is used to request to establish the end-to-end unicast connection between the first terminal device and the third terminal device, and the second DCR message is used to request to establish the hop-by-hop unicast connection between the first terminal device and the second terminal device.

Optionally, the first DCR message carries QoS information, and the QoS information indicates that the first DCR message is used to request to establish the end-to-end unicast connection between the first terminal device and the third terminal device.

Optionally, the first DCR message is carried on a first channel, the first channel is associated with a first channel identifier, and the first channel identifier is preset. Correspondingly, after receiving the first DCR message, the second terminal device may determine, based on the first channel identifier, that the current scenario is the U2U relay communication scenario, and the first DCR message is used to request to establish the end-to-end unicast connection between the first terminal device and the third terminal device.

Optionally, the first DCR message carries an SRAP header. Correspondingly, after receiving the first DCR message, the second terminal device may determine, based on the SRAP header, that the current scenario is the U2U relay communication scenario, and may determine, based on bearer identifier information in the SRAP header, that the first DCR message is used to request to establish the end-to-end unicast connection between the first terminal device and the third terminal device.

S902: The second terminal device forwards the first DCR message to the third terminal device.

Specifically, after receiving the first DCR message, the second terminal device determines that the first DCR message is used to request to establish the end-to-end unicast connection between the first terminal device and the third terminal device, and forwards the first DCR message to the third terminal device.

Similarly, because the first DCR message is a 2^{nd} DCR message received by the third terminal device, the third terminal device may determine a function of the first DCR message based on a time sequence of receiving the DCR messages.

Optionally, the first DCR message carries the QoS information, and the QoS information indicates that the first DCR message is used to request to establish the end-to-end unicast connection between the first terminal device and the third terminal device. Correspondingly, after receiving the first DCR message, the third terminal device determines, based on the QoS information, the unicast connection that the first terminal device requests to establish.

Optionally, the first DCR message is carried on the first channel, the first channel is associated with the first channel identifier, and the first channel identifier is preset. Correspondingly, after receiving the first DCR message, the third terminal device may determine, based on the first channel identifier, that the current scenario is the U2U relay communication scenario, and the first DCR message is used to request to establish the end-to-end unicast connection between the first terminal device and the third terminal device.

S903: The first terminal device remains in a state that is before the sending of the first DCR message.

Specifically, after sending the first DCR message, the first terminal device remains in the state that is before the sending of the first DCR message. For example, the first terminal device does not start an active timer for a procedure of establishing the end-to-end unicast connection between the first terminal device and the third terminal device.

It should be noted that, that the first terminal device remains in the state that is before the sending of the first DCR message may mean that the first terminal device does not perform any operation after sending the first DCR message, cancels the starting of the active timer for the procedure of establishing the end-to-end unicast connection between the first terminal device and the third terminal device, or maintains an original DRX configuration. For example, the first terminal device maintains a DRX configuration of a unicast connection between the first terminal device and the second terminal device.

S904: The second terminal device remains in a state that is before the forwarding of the first DCR message.

Specifically, after forwarding the first DCR message, the second terminal device remains in the state that is before the forwarding of the first DCR message. For example, the second terminal device does not start the active timer for the procedure of establishing the end-to-end unicast connection between the first terminal device and the third terminal device.

It should be noted that, that the second terminal device remains in the state that is before the forwarding of the first DCR message may mean that the second terminal device does not perform any operation after forwarding the first DCR message, cancels the starting of the active timer for the procedure of establishing the end-to-end unicast connection between the first terminal device and the third terminal device, or maintains an original DRX configuration. For example, the second terminal device maintains the DRX configuration of the unicast connection between the first terminal device and the second terminal device, and/or the second terminal device maintains a DRX configuration of a unicast connection between the second terminal device and the third terminal device.

S905: The third terminal device remains in a state that is before the receiving of the first DCR message.

Specifically, after receiving the first DCR message, the third terminal device remains in the state that is before the receiving of the first DCR message. For example, the third terminal device does not start the active timer for the procedure of establishing the end-to-end unicast connection between the first terminal device and the third terminal device.

It should be noted that, that the third terminal device remains in the state that is before the receiving of the first DCR message may mean that the third terminal device does not perform any operation after receiving the first DCR message, cancels the starting of the active timer for the procedure of establishing the end-to-end unicast connection between the first terminal device and the third terminal device, or maintains an original DRX configuration. For example, the third terminal device maintains the DRX configuration of the unicast connection between the second terminal device and the third terminal device.

S906: Establish a secure connection between the first terminal device and the third terminal device.

Specifically, for the establishment process, refer to related descriptions in S806. Details are not described herein again.

S907: The third terminal device sends the first DCA message to the second terminal device.

Specifically, after the establishment of the end-to-end unicast connection between the first terminal device and the third terminal device is completed, the third terminal device sends the first DCA message to the second terminal device. The first DCA message is used to report that the establishment of the end-to-end unicast connection between the first terminal device and the third terminal device is completed.

S908: The second terminal device forwards the first DCA message to the first terminal device.

Specifically, after receiving the first DCA message sent by the third terminal device, the second terminal device forwards the first DCA message to the first terminal device.

Based on the foregoing solutions, in this embodiment of this application, when the end-to-end unicast connection is established in the U2U relay communication scenario, when the first terminal device, the second terminal device, and the third terminal device receive and send the DCR message used to establish the end-to-end unicast connection, the first terminal device, the second terminal device, and the third terminal device remain in the states that are before the receiving and sending of the DCR message, for example, maintain the original DRX configurations. In comparison with a conventional technology in which an active state always remains, in the solutions provided in this application, a DRX mechanism may be introduced in the U2U relay communication scenario, to save energy.

In another implementation, the first terminal device notifies the second terminal device that a current scenario is a U2U relay communication scenario by distinguishing between the U2U relay scenario and a direct connection scenario.

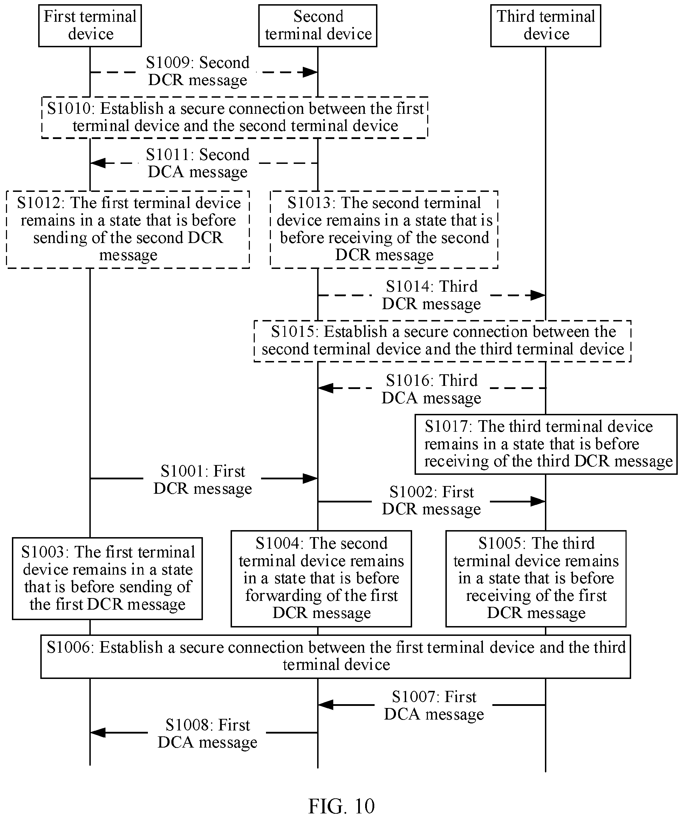

Specifically, FIG. 10 is used as an example for description. The process includes the following steps.

S1009: The first terminal device sends the second DCR message to the second terminal device.

Specifically, when the first terminal device determines to perform relay communication with the third terminal device through the second terminal device, the second DCR message carries an RSC, and the RSC indicates that the current scenario is the U2U relay communication scenario.

Optionally, the second DCR message carries L2 identifier information, and the L2 identifier information is associated with the U2U relay communication scenario, and indicates that the current communication scenario is the U2U relay communication scenario. Correspondingly, after receiving the second DCR message, the second terminal device may determine, based on the L2 identifier information carried in the second DCR message, that the current scenario is the U2U relay communication scenario.

S1010: Establish a secure connection between the first terminal device and the second terminal device.

S1011: The second terminal device sends the second DCA message to the first terminal device.

S1012: The first terminal device remains in a state that is before the sending of the second DCR message.

Specifically, after sending the second DCR message, the first terminal device maintains a DRX configuration that is before the sending of the second DCR message. For example, after sending the second DCR message, the first terminal device does not start an active timer for a unicast connection between the first terminal device and the second terminal device.

S1013: The second terminal device remains in a state that is before the receiving of the second DCR message.

Specifically, after receiving the second DCR message, the second terminal device maintains a DRX configuration that is before the receiving of the second DCR message. For example, after receiving the second DCR message, the second terminal device does not start the active timer for the unicast connection between the first terminal device and the second terminal device.

S1014: The second terminal device sends the third DCR message to the third terminal device.

Specifically, when determining that the current scenario is the U2U relay communication scenario, the second terminal device sends the third DCR message to the third terminal device. The third DCR message is used to request to establish a hop-by-hop unicast connection between the second terminal device and the third terminal device. The third DCR message carries an RSC, and the RSC indicates that the current scenario is the U2U relay communication scenario. Correspondingly, after receiving the third DCR message, the third terminal device determines, based on the RSC, that the current scenario is the U2U relay communication scenario.

Optionally, the third DCR message carries the L2 identifier information, and the third DCR message is used to establish the hop-by-hop unicast connection between the second terminal device and the third terminal device. Correspondingly, after receiving the third DCR message, the third terminal device may determine, based on the L2 identifier information carried in the third DCR message, that the current scenario is the U2U relay communication scenario.

S1015: Establish a secure connection between the second terminal device and the third terminal device.

Specifically, the process includes: The third terminal device sends a security mode command message to the second terminal device. The security mode command message indicates that the third terminal device requires the second terminal device to establish the secure connection. After receiving the security mode command message, the second terminal device sends a security mode complete message to the third terminal device. The security mode complete message indicates that the establishment of the secure connection between the second terminal device and the third terminal device is completed.

S1016: The third terminal device sends the third DCA message to the second terminal device.

For S1017, refer to the foregoing S917. Details are not described herein again.

S1001: The first terminal device sends the first DCR message to the second terminal device.

Specifically, after establishment of a hop-by-hop unicast connection between the first terminal device and the second terminal device is completed, the first terminal device sends the first DCR message to the second terminal device, to request to establish an end-to-end unicast connection between the first terminal device and the third terminal device. The first DCR message carries an RSC, and the RSC indicates that the current scenario is the U2U relay communication scenario. Correspondingly, after receiving the third DCR message, the second terminal device determines, based on the RSC, that the current scenario is the U2U relay communication scenario.

Optionally, the first DCR message carries the L2 identifier information. The L2 identifier information is associated with the U2U relay communication scenario, and indicates that the current communication scenario is the U2U relay communication scenario. Correspondingly, after receiving the second DCR message, the second terminal device may determine, based on the L2 identifier information carried in the second DCR message, that the current scenario is the U2U relay communication scenario.

S1002: The second terminal device forwards the first DCR message to the third terminal device.

Specifically, after receiving the first DCR message, the second terminal device determines that the first DCR message is used to request to establish the end-to-end unicast connection between the first terminal device and the third terminal device, and forwards the first DCR message to the third terminal device.

Optionally, the third terminal device may determine, based on the RSC or the L2 identifier information carried in the first DCR message, that the current scenario is the U2U relay communication scenario.

S1003: The first terminal device remains in a state that is before the sending of the first DCR message. For details, refer to the foregoing S903. Details are not described herein again.

S1004: The second terminal device remains in a state that is before the forwarding of the first DCR message. For details, refer to the foregoing S904. Details are not described herein again.

S1005: The third terminal device remains in a state that is before the receiving of the first DCR message. For details, refer to the foregoing S905. Details are not described herein again.

S1006: Establish a secure connection between the first terminal device and the third terminal device. For details, refer to the foregoing S906. Details are not described herein again.

S1007: The third terminal device sends the first DCA message to the second terminal device. For details, refer to the foregoing S907. Details are not described herein again.

S1008: The second terminal device forwards the first DCA message to the first terminal device. For details, refer to the foregoing S908. Details are not described herein again.

Based on the foregoing solutions, in this embodiment of this application, when the end-to-end unicast connection is established in the U2U relay communication scenario, the terminal device may determine, based on the information carried in the DCR message, that the current scenario is the U2U relay communication scenario, and maintain the original DRX configuration, to save energy.

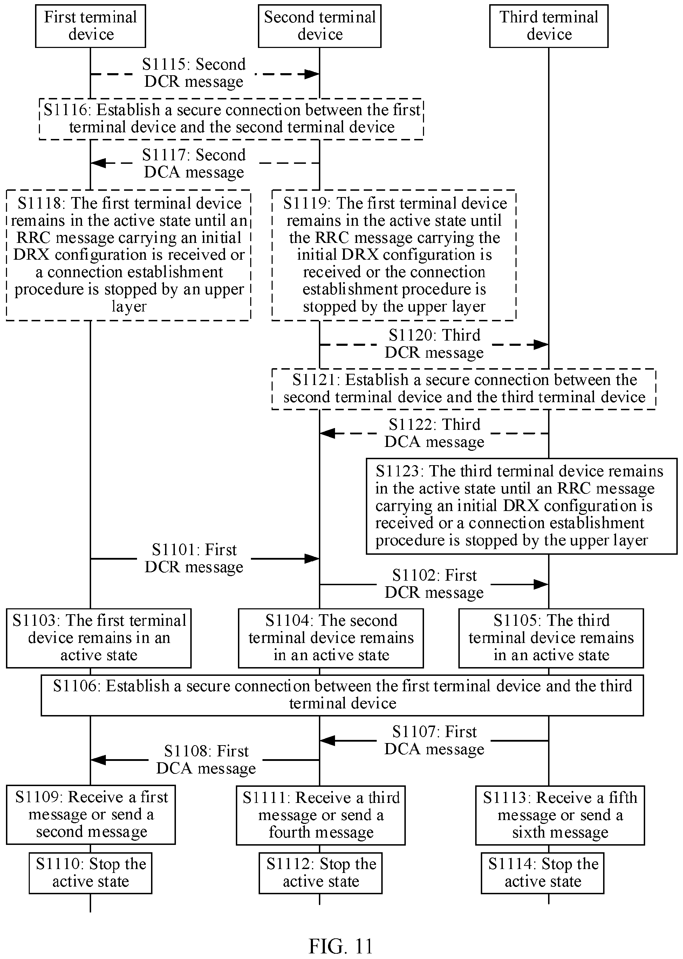

FIG. 11 is a schematic flowchart of a sidelink communication method 1100 from a perspective of device interaction according to an embodiment of this application. The following describes in detail steps in the method 1100.

It should be noted that, in comparison with the method 900 shown in FIG. 9, in the method 1100 shown in FIG. 11, after sending a first DCR message, a first terminal device remains in an active state, and stops the active state after receiving a first message or sending a second message. Similarly, a second terminal device and a third terminal device also remain in an active state after receiving the first DCR message. The second terminal device stops the active state after receiving a third message or sending a fourth message. The third terminal device stops the active state after receiving a fifth message or sending a sixth message.

Specifically, for S1115 to S1123, refer to the foregoing S909 to S917. Details are not described herein again.

For S1101 and S1102, refer to the foregoing S901 and S902. Details are not described herein again.

S1103: The first terminal device remains in the active state.

Specifically, when the first terminal device determines that relay communication with the third terminal device currently needs to be performed through the second terminal device, after sending the first DCR message to the second terminal device, the first terminal device starts an active timer for an end-to-end unicast connection between the first terminal device and the third terminal device, and remains in the active state on the end-to-end unicast connection between the first terminal device and the third terminal device.

S1104: The second terminal device remains in the active state.

Specifically, after forwarding the first DCR message to the third terminal device, the second terminal device remains in the active state on the end-to-end unicast connection between the first terminal device and the third terminal device, and starts the active timer for the end-to-end unicast connection between the first terminal device and the third terminal device.

S1105: The third terminal device remains in the active state.

Specifically, after receiving the first DCR message, the third terminal device remains in the active state on the end-to-end unicast connection between the first terminal device and the third terminal device, and starts the active timer for the end-to-end unicast connection between the first terminal device and the third terminal device.

For S1106 to S1108, refer to the foregoing S906 to S908 in FIG. 9. Details are not described herein again.

S1109: The first terminal device receives the first message or sends the second message.

Specifically, for the first message and the second message, refer to related descriptions in S802 in FIG. 8. Details are not described herein again.

S1110: The first terminal device stops the active state.

Specifically, the first terminal device stops the active state after receiving the first message or sending the second message. Stopping the active state means enabling a DRX configuration received by the first terminal device or a pre-configured DRX configuration.

S1111: The second terminal device receives the third message or sends the fourth message.

Specifically, for the third message and the fourth message, refer to related descriptions in S804 in FIG. 8. Details are not described herein again.

S1112: The second terminal device stops the active state.

Specifically, the second terminal device stops the active state after receiving the third message or sending the fourth message. Stopping the active state means enabling a DRX configuration received by the second terminal device or a pre-configured DRX configuration.

S1113: The third terminal device receives the fifth message or sends the sixth message.

Specifically, for the fifth message and the sixth message, refer to related descriptions in S805 in FIG. 8. Details are not described herein again.

S1114: The third terminal device stops the active state.

Specifically, the third terminal device stops the active state after receiving the fifth message or sending the sixth message. Stopping the active state means enabling a DRX configuration received by the third terminal device or a pre-configured DRX configuration.

It should be noted that, in the method 1100 shown in FIG. 11, after receiving the first DCR message, the second terminal device may not remain in the active state, and still uses the method shown in FIG. 9 or FIG. 10, and remains in a state that is before the forwarding of the first DCR message. It should be understood that, when the second terminal device remains in the state that is before the forwarding of the first DCR message, the second terminal device does not receive the third message or send the fourth message.

In addition, it should be further noted that, in some scenarios, for example, when there are a plurality of relay devices between the first terminal device and the third terminal device, the first DCR message may be sent by the first terminal device in a broadcast manner. In this case, the second terminal device is used as one of the plurality of relay devices. If the second terminal device determines that the first DCR message is a broadcast message, the second terminal device may choose to remain in the state that is before the forwarding of the first DCR message.

Based on the foregoing solutions, according to the sidelink communication method provided in this embodiment of this application, when the terminal device remains in the active state, a deadline for stopping the active state, that is, the first message to the sixth message, is introduced for the terminal device, so that the terminal device can determine stop time of the active state based on the received or sent message, to reduce energy consumption of the terminal.

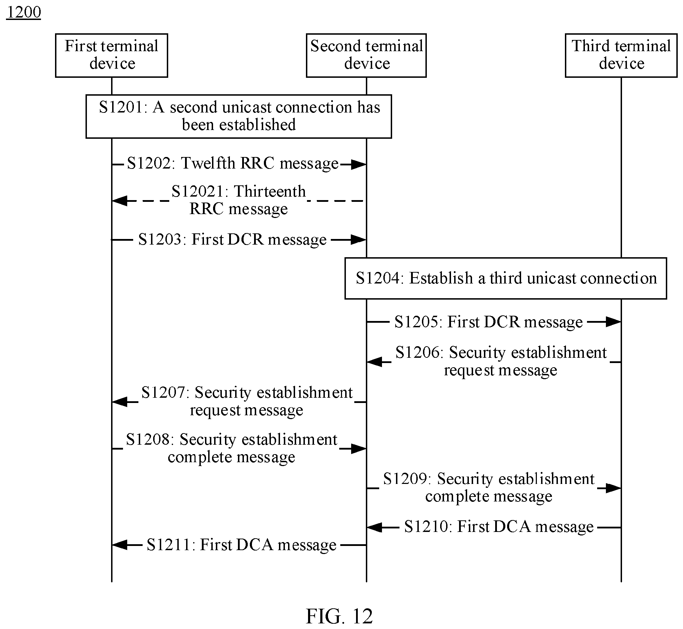

FIG. 12 is a schematic flowchart of a sidelink communication method 1200 from a perspective of device interaction according to an embodiment of this application. The following describes in detail steps in the method 1200.

S1201: A hop-by-hop unicast connection between a first terminal device and a second terminal device has been established.

Specifically, when the first terminal device determines that communication with a third terminal device needs to be performed through the second terminal device as a relay terminal device, the first terminal device may select the second terminal device that has established the unicast connection as the relay terminal device. It should be understood that a DRX configuration has been mutually configured between the first terminal device and the second terminal device.

S1202: The first terminal device sends a twelfth RRC message to the second terminal device.

Specifically, after selecting the second terminal device as a relay, the first terminal device sends the twelfth RRC message to the second terminal device. The twelfth RRC message is used to disable a DRX configuration of the second terminal device on the hop-by-hop unicast connection between the first terminal device and the second terminal device. In other words, after receiving the twelfth RRC message, the second terminal device stops an active state.

Optionally, the method further includes S12021: The second terminal device sends a thirteenth RRC message to the first terminal device.

Specifically, after receiving the twelfth RRC message, the second terminal device may further send the thirteenth RRC message to the first terminal device. The thirteenth RRC message is used to disable a DRX configuration of the first terminal device on the hop-by-hop unicast connection between the first terminal device and the second terminal device. In other words, after receiving the thirteenth RRC message, the first terminal device stops an active state.

S1203: The first terminal device sends a first DCR message to the second terminal device.

Specifically, the first terminal device sends the first DCR message to the second terminal device. The first DCR message is used to request to establish an end-to-end unicast connection between the first terminal device and the third terminal device.

S1204: Establish a hop-by-hop unicast connection between the second terminal device and the third terminal device.

Specifically, after receiving the first DCR message from the first terminal device, the second terminal device establishes the hop-by-hop unicast connection to the third terminal device.

Optionally, when the twelfth RRC message in S1202 carries an indication for establishing the hop-by-hop unicast connection between the second terminal device and the third terminal device, S1204 may be performed after S1202.

S1205: The second terminal device forwards the first DCR message to the third terminal device.

Specifically, the second terminal device forwards the first DCR message to the third terminal device. Correspondingly, the third terminal device receives the first DCR message.

S1206: The third terminal device sends a security establishment request message to the second terminal device.

Specifically, after receiving the first DCR message, the third terminal device sends the security establishment request message to the second terminal device. The security establishment request message is used to request to establish the end-to-end unicast connection between the first terminal device and the third terminal device.

S1207: The second terminal device forwards the security establishment request message to the first terminal device.

S1208: The first terminal device sends a security establishment complete message to the second terminal device.

Specifically, after the establishment of the end-to-end unicast connection between the first terminal device and the third terminal device is completed, the first terminal device sends the security establishment complete message to the second terminal device. The security establishment complete message is used to report that the establishment of the end-to-end unicast connection between the first terminal device and the third terminal device is completed.

S1209: The second terminal device forwards the security establishment request message to the third terminal device.

For S1210 and S1211, refer to the foregoing S907 and S908 in FIG. 9 respectively. Details are not described herein again.

It should be noted that sending in the foregoing S1202 and/or S12021 may be performed between S1206 and S1207. It should be understood that, disabling time of DRX between the first terminal device and the second terminal device in a case in which sending in S1202 and/or S12021 is performed between S1201 and S1203 is earlier than that in a case in which sending in S 1202 and/or S12021 is performed between S1206 and S 1207. For details, refer to the foregoing descriptions. Details are not described herein again.

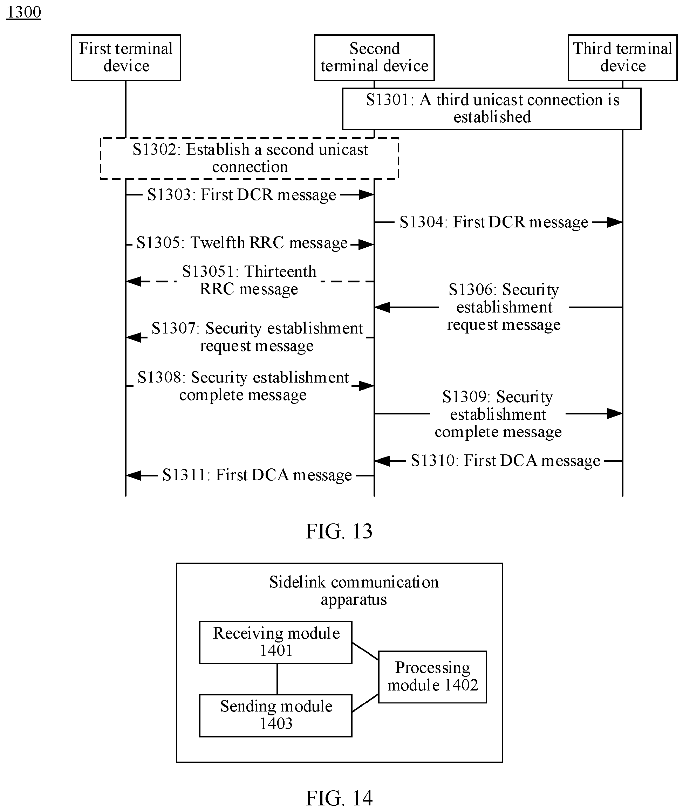

It should be understood that FIG. 12 is applicable to a scenario in which there is a hop-by-hop unicast connection between the first terminal device and the second terminal device, and FIG. 13 is a solution in which a hop-by-hop unicast connection has been established between the second terminal device and the third terminal device. In comparison with the method 1200 shown in FIG. 12, differences lie in S1301 and S130.

S1301: A hop-by-hop unicast connection has been established between the second terminal device and the third terminal device.

S1302: Establish a hop-by-hop unicast connection between the first terminal device and the second terminal device.

Specifically, when the hop-by-hop unicast connection is established between the second terminal device and the third terminal device, the method 1300 shown in FIG. 13 may be used.

Optionally, the first terminal device selects the second terminal device that has established the unicast connection to the third terminal device as a relay, and establishes the unicast connection to the second terminal device.

For S1303 to S1311, refer to S1202, S1203, and S1205 to S1211 in FIG. 12. Details are not described herein again.

It should be understood that sending in S1305 and/or S13051 may be performed between S1306 and S1307.

Based on the foregoing solutions, according to the sidelink communication method provided in this embodiment of this application, when the end-to-end unicast connection is established in the U2U relay communication scenario, the DRX configuration is disabled, to reduce a delay of establishing the end-to-end unicast connection.

FIG. 14 is a block diagram of a sidelink communication apparatus 1400 according to an embodiment of this application. The apparatus 1400 includes a receiving module 1401. The receiving module 1401 may be configured to implement a corresponding receiving function. The receiving module 1401 may also be referred to as a receiving unit.

The apparatus 1400 further includes a processing module 1402. The processing module 1402 may be configured to implement a corresponding processing function.

The apparatus 1400 further includes a sending module 1403. The sending module 1403 may be configured to implement a corresponding sending function, and the sending module 1403 may also be referred to as a sending unit.

Optionally, the apparatus 1400 further includes a storage unit. The storage unit may be configured to store instructions and/or data. The processing unit 1402 may read the instructions and/or the data in the storage unit, to enable the apparatus to implement actions of a related apparatus in the foregoing method embodiments.

The apparatus 1400 may be configured to perform the methods performed by the first terminal device, the second terminal device, or the third terminal device in the foregoing method embodiments. In this case, the apparatus 1400 may be a component of the first terminal device, the second terminal device, or the third terminal device. The receiving module 1401 is configured to perform a receiving-related operation of the first terminal device, the second terminal device, or the third terminal device in the foregoing method embodiments, the processing module 1402 is configured to perform a processing-related operation of the first terminal device, the second terminal device, or the third terminal device in the foregoing method embodiments, and the sending module 1403 is configured to perform a sending-related operation of the first terminal device, the second terminal device, or the third terminal device in the foregoing method embodiments.

**In a** design, the apparatus 1400 is configured to perform actions performed by the first terminal device, the second terminal device, or the third terminal device in the foregoing method embodiments (the method 800 to the method 1300). In an embodiment, the sidelink communication apparatus may be configured to perform operations of the first terminal device in FIG. 8 to FIG. 13. For example:

The receiving module 1401 is configured to receive a first message.

The processing module 1402 is configured to remain in a state that is before sending of a first request message, and is further configured to determine that a connection establishment procedure is stopped by an upper layer.

The sending module 1403 is configured to send the first request message to the second terminal device. The first request message is used to request to establish a first unicast connection, and the first unicast connection is an end-to-end unicast connection between the first terminal device and the third terminal device. The sending module 1403 is further configured to send a second message.

It should be understood that a specific process in which the modules perform the foregoing corresponding steps is described in detail in the foregoing method embodiments. For brevity, details are not described herein again.

**In** addition, the receiving module 1401, the processing module 1402, and the sending module 1403 in the sidelink communication apparatus may further implement another operation or function of the first terminal device in the foregoing methods. Details are not described herein again.

Optionally, the sidelink communication apparatus 1400 may be a device including the first terminal device. Alternatively, the sidelink communication apparatus 1400 may be a component configured in the first terminal device, for example, a chip in the first terminal device. In this case, the receiving module 1401 and the sending module 1403 may be interface circuits, pins, or the like. Specifically, the interface circuit may include an input circuit and an output circuit. The receiving module 1401 may include an input circuit, the sending module 1403 may include an output circuit, and the processing module 1402 may include a processing circuit.

In another embodiment, the sidelink communication apparatus may be configured to perform operations of the second terminal device in FIG. 8 to FIG. 13. For example:

The receiving module 1401 is configured to receive a first request message from the first terminal device. The first request message is used to request to establish a first unicast connection, and the first unicast connection is an end-to-end unicast connection between the first terminal device and the third terminal device. The receiving module 1401 is further configured to receive a third message.

The processing module 1402 is configured to remain in a state that is before the receiving of the first request message, and is further configured to determine that a connection establishment procedure is stopped by an upper layer.

The sending module 1403 is configured to forward the first request message to the third terminal device. The sending module 1403 is further configured to send a fourth message.

In addition, the receiving module 1401, the processing module 1402, and the sending module 1403 in the sidelink communication apparatus may further implement another operation or function of the second terminal device in the foregoing methods. Details are not described herein again.

Optionally, the sidelink communication apparatus 1400 may be a device including the second terminal device. Alternatively, the sidelink communication apparatus 1400 may be a component configured in the second terminal device, for example, a chip in the second terminal device. In this case, the receiving module 1401 and the sending module 1403 may be interface circuits, pins, or the like. Specifically, the interface circuit may include an input circuit and an output circuit. The receiving module 1401 may include an input circuit, the sending module 1403 may include an output circuit, and the processing module 1402 may include a processing circuit.

It should be understood that a specific process in which the modules perform the foregoing corresponding steps is described in detail in the foregoing method embodiments. For brevity, details are not described herein again.

In another embodiment, the sidelink communication apparatus may be configured to perform operations of the third terminal device in FIG. 8 to FIG. 13. For example:
The receiving module 1401 is configured to receive a first request message from the second terminal device. The first request message is used to request to establish a first unicast connection, and the first unicast connection is an end-to-end unicast connection between the first terminal device and the third terminal device. The receiving module 1401 is further configured to receive a fifth message.

The processing module 1402 is configured to remain in a state that is before the receiving of the first request message, and is further configured to determine that a connection establishment procedure is stopped by an upper layer.

The sending module 1403 is configured to send a sixth message.

In addition, the receiving module 1401, the processing module 1402, and the sending module 1403 in the sidelink communication apparatus may further implement another operation or function of the third terminal device in the foregoing methods. Details are not described herein again.

Optionally, the sidelink communication apparatus 1400 may be a device including the third terminal device. Alternatively, the sidelink communication apparatus 1400 may be a component configured in the third terminal device, for example, a chip in the third terminal device. In this case, the receiving module 1401 and the sending module 1403 may be interface circuits, pins, or the like. Specifically, the interface circuit may include an input circuit and an output circuit. The receiving module 1401 may include an input circuit, the sending module 1403 may include an output circuit, and the processing module 1402 may include a processing circuit.

It should be understood that a specific process in which the modules perform the foregoing corresponding steps is described in detail in the foregoing method embodiments. For brevity, details are not described herein again.

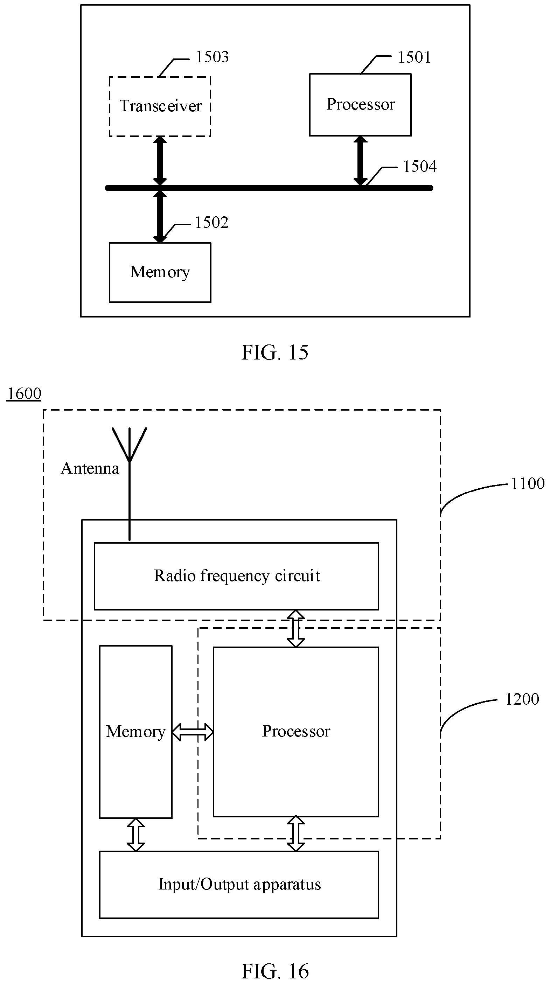

FIG. 15 is a diagram of a structure of another sidelink communication apparatus according to an embodiment of this application. The data scheduling apparatus 1500 for coordinated transmission includes a processor 1501. As shown in FIG. 15, the sidelink communication apparatus 1500 may further include at least one memory 1502, configured to store a computer program or instructions and/or data. The memory 1502 is coupled to the processor 1501, and the processor 1501 is configured to execute the computer program or the instructions and/or the data stored in the memory 1502, to enable the methods (the method 800 to the method 1300) in the foregoing method embodiments to be performed. The coupling in this embodiment of this application may be an indirect coupling or a communication connection between apparatuses, units, or modules in an electrical form, a mechanical form, or another form, and is used for information exchange between the apparatuses, the units, or the modules. The processor 1501 may operate in collaboration with the memory 1502. At least one of the at least one memory 1502 may be included in the processor 1501.

Optionally, the sidelink communication apparatus 1500 includes one or more processors 1501.

Optionally, the memory 1502 and the processor 1501 may be integrated together or disposed separately.

The sidelink communication apparatus 1500 may further include a transceiver 1503, configured to perform sidelink communication with another device by using a transmission medium, so that the apparatus can perform sidelink communication with another device. Optionally, the transceiver 1503 may be an interface, a bus, a circuit, or an apparatus that can implement sending and receiving functions.

Optionally, a component that is in the transceiver 1503 and that is configured to implement a receiving function may be considered as a receiving module, and a component that is in the transceiver 1503 and that is configured to implement a sending function may be considered as a sending module. That is, the transceiver 1503 includes a receiver and a transmitter.

A specific connection medium between the processor 1501, the memory 1502, and the transceiver 1503 is not limited in this embodiment of this application. In this embodiment of this application, the processor 1501, the memory 1502, and the transceiver 1503 are connected through a bus 1504 in FIG. 15, and the bus is represented by using a bold line in FIG. 15. A connection manner between other components is merely an example for description, and is not limited thereto. The bus may be classified into an address bus, a data bus, a control bus, and the like.

It should be understood that for ease of representation, only one bold line is used to represent the bus in FIG. 15, but this does not mean that there is only one bus or only one type of bus.

Optionally, as shown in FIG. 15, the sidelink communication apparatus 1500 may further include a transceiver 1503 and/or a communication interface. The transceiver 1503 and/or the communication interface are/is configured to receive and/or send a signal. For example, the processor 1501 is configured to control the transceiver 1503 and/or the communication interface to receive and/or send data.

The transceiver sometimes may also be referred to as a transceiver machine, a transceiver module, a transceiver circuit, or the like. The receiver sometimes may also be referred to as a receiver machine, a receiving module, a receiving circuit, or the like. The transmitter sometimes may also be referred to as a transmitter machine, a transmitter, a transmitting module, a transmitting circuit, or the like.

For example, in an embodiment, the processor 1501 is configured to perform another operation or function of a first terminal device. The transceiver 1503 is configured to implement sidelink communication between the sidelink communication apparatus and a second terminal device or a third terminal device.

In another embodiment, the processor 1501 is configured to perform another operation or function of a second terminal device. The transceiver 1503 is configured to implement sidelink communication between the sidelink communication apparatus and a first terminal device or a third terminal device.

In still another embodiment, the processor 1501 is configured to perform another operation or function of a third terminal device. The transceiver 1503 is configured to implement sidelink communication between the sidelink communication apparatus and a first terminal device or a second terminal device.

One or more of the foregoing modules or units may be implemented by software, hardware, or a combination thereof. When any one of the foregoing modules or units is implemented by software, the software exists in a form of computer program instructions, and is stored in the memory. The processor may be configured to execute the program instructions and implement the foregoing method procedures. The processor may include but is not limited to at least one of the following various computing devices that run software: a central processing unit (central processing unit, CPU), a microprocessor, a digital signal processor (DSP), a microcontroller unit (microcontroller unit, MCU), an artificial intelligence processor, or the like. Each computing device may include one or more cores used to execute software instructions to perform operations or processing. The processor may be built in a SoC (system on a chip) or an application-specific integrated circuit (application-specific integrated circuit, ASIC), or may be an independent semiconductor chip. In addition to the core used to execute software instructions to perform operations or processing, the processor may further include a necessary hardware accelerator, for example, a field programmable gate array (field programmable gate array, FPGA), a PLD (programmable logic device), or a logic circuit that implements a dedicated logic operation.

When the foregoing modules or units are implemented by hardware, the hardware may be any one or any combination of a CPU, a microprocessor, a DSP, an MCU, an artificial intelligence processor, an ASIC, a SoC, an FPGA, a PLD, a dedicated digital circuit, a hardware accelerator, or a non-integrated discrete device. The hardware may run necessary software or does not depend on software to perform the foregoing method procedures.

When the foregoing modules or units are implemented by software, all or some of the modules or units may be implemented in a form of a computer program product. The computer program product includes one or more computer instructions. When the computer program instructions are loaded and executed on a computer, all or some of the procedures or functions according to embodiments of the present invention are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

The objectives, technical solutions, and beneficial effects of this application are further described in detail in the foregoing specific implementations. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application.

An embodiment of this application further provides another sidelink communication apparatus 1600. The apparatus 1600 may be a terminal device or may be a chip. The apparatus 1600 may be configured to perform operations performed by the first terminal device, the second terminal device, or the third terminal device in the foregoing method embodiments (the method 800 to the method 1300).

When the sidelink communication apparatus 1600 is the first terminal device, the second terminal device, or the third terminal device, FIG. 16 is a diagram of a simplified structure of the first terminal device, the second terminal device, or the third terminal device. As shown in FIG. 16, the sidelink communication apparatus 1600 includes a processor, a memory, a radio frequency circuit, an antenna, and an input/output apparatus. The processor is mainly configured to: process a communication protocol and communication data, control the terminal device, execute a software program, process data of the software program, and the like. The memory is mainly configured to store the software program and the data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, for example, a touchscreen, a display, or a keyboard, is mainly configured to: receive data input by a user and output data to the user. It should be noted that some types of terminal devices may have no input/output apparatus.

When needing to send data, after performing baseband processing on the to-be-sent data, the processor outputs a baseband signal to the radio frequency circuit, and the radio frequency circuit performs radio frequency processing on the baseband signal and then sends a radio frequency signal to the outside in a form of an electromagnetic wave through the antenna. When data is sent to the terminal device, the radio frequency circuit receives a radio frequency signal through the antenna, converts the radio frequency signal into a baseband signal, and outputs the baseband signal to the processor. The processor converts the baseband signal into data and processes the data. For ease of description, FIG. 16 shows only one memory and one processor. In an actual terminal device product, there may be one or more processors and one or more memories. The memory may also be referred to as a storage medium, a storage device, or the like. The memory may be disposed independent of the processor, or may be integrated with the processor. This is not limited in this embodiment of this application.

In this embodiment of this application, the antenna and the radio frequency circuit that have sending and receiving functions may be considered as a transceiver unit of the terminal device, and the processor that has a processing function may be considered as a processing unit of the terminal device.

As shown in FIG. 16, the sidelink communication apparatus 1600 includes a transceiver unit 1100 and a processing unit 1200. The transceiver unit 1100 may also be referred to as a transceiver, a transceiver machine, a transceiver apparatus, a transceiver circuit, or the like. The processing unit 1200 may also be referred to as a processor, a processing board, a processing module, a processing apparatus, or the like.

Optionally, a component that is in the transceiver unit 1100 and that is configured to implement a receiving function may be considered as a receiving unit, and a component that is in the transceiver unit 1100 and that is configured to implement a sending function may be considered as a sending unit. That is, the transceiver unit 1100 includes the receiving unit and the sending unit. The receiving unit sometimes may also be referred to as a receiver machine, a receiver, a receiving apparatus, a receiving circuit, or the like. The sending unit sometimes may also be referred to as a transmitter machine, a transmitter, a transmitting apparatus, a transmitting circuit, or the like.

It should be understood that FIG. 16 is merely an example rather than a limitation. The first terminal device, the second terminal device, or the third terminal device including the transceiver unit and the processing unit may not depend on the structure shown in FIG. 16.

When the sidelink communication apparatus 1600 is a chip, the chip includes a transceiver unit and a processing unit. The transceiver unit may be an input/output circuit or a communication interface. The processing unit may be a processor, a microprocessor, or an integrated circuit integrated on the chip.

According to the method provided in embodiments of this application, this application further provides a computer program product. The computer program product includes computer program code. When the computer program code is run on a computer, the computer is enabled to perform the methods of the first terminal device in the foregoing method embodiments.

According to the method provided in embodiments of this application, this application further provides a computer program product. The computer program product includes computer program code. When the computer program code is run on a computer, the computer is enabled to perform the methods of the second terminal device in the foregoing method embodiments.

According to the method provided in embodiments of this application, this application further provides a computer program product. The computer program product includes computer program code. When the computer program code is run on a computer, the computer is enabled to perform the methods of the third terminal device in the foregoing method embodiments.

According to the method provided in embodiments of this application, this application further provides a computer-readable medium. The computer-readable medium stores program code. When the program code is run on a computer, the computer is enabled to perform the methods of the first terminal device in the foregoing method embodiments.

According to the method provided in embodiments of this application, this application further provides a computer-readable medium. The computer-readable medium stores program code. When the program code is run on a computer, the computer is enabled to perform the methods of the second terminal device in the foregoing method embodiments.

According to the method provided in embodiments of this application, this application further provides a computer-readable medium. The computer-readable medium stores program code. When the program code is run on a computer, the computer is enabled to perform the methods of the third terminal device in the foregoing method embodiments.

An embodiment of this application further provides a processing apparatus, including a processor and an interface. The processor is configured to perform the sidelink communication method in any one of the foregoing method embodiments.

An embodiment of this application further provides a sidelink communication system. The system includes the first terminal device, at least one second terminal device, and at least one third terminal device in the foregoing embodiments.

Terms such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or an execution thread, and a component may be located on one computer and/or distributed between two or more computers. In addition, these components may be executed from various computer-readable media that store various data structures. For example, the components may communicate by using a local and/or remote process and based on a signal having one or more data packets (for example, data from two components interacting with another component in a local system, a distributed system, and/or across a network such as the Internet interacting with other systems by using the signal).

A person of ordinary skill in the art may be aware that, various illustrative logical blocks (illustrative logical blocks) and steps (steps) described with reference to embodiments disclosed in this specification may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

A person of ordinary skill in the art may be aware that, units and algorithm steps in the examples described with reference to embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for detailed working processes of the foregoing systems, apparatuses, and units, refer to corresponding processes in the foregoing method embodiments. Details are not described herein again.

It should be understood that "at least one" in embodiments of this application means one or more, and "a plurality of" means two or more than two. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof means any combination of these items, including a single item (piece) or any combination of a plurality of items (pieces). For example, at least one item (piece) of a, b, and c may indicate a, b, c, a and b, a and c, b and c, or a, b, and c, where a, b, and c each may be in a singular form or a plural form.

In several embodiments provided in this application, it should be understood that the disclosed systems, apparatuses, and methods may be implemented in other manners. For example, the described apparatus embodiments are merely examples. For example, division into the units is merely logical function division, and there may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may or may not be physical units, that is, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to a conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A sidelink communication method, comprising:
sending, by a first terminal device, a first request message to a second terminal device, wherein the first request message is used to request to establish a first unicast connection, and the first unicast connection is an end-to-end unicast connection between the first terminal device and a third terminal device; and
remaining, by the first terminal device, in a state that is before the sending of the first request message;
or
remaining, by the first terminal device, in an active state until a first message is received, a second message is sent, or a connection establishment procedure is stopped by an upper layer.

2. The method according to claim 1, wherein remaining, by the first terminal device, in the state that is before the sending of the first request message comprises: maintaining, by the first terminal device, a discontinuous reception DRX configuration maintained before the sending of the first request message.

3. The method according to claim 1 or 2, wherein the method further comprises:
sending, by the first terminal device, a second request message to the second terminal device, wherein the second request message is used to request to establish a second unicast connection, and the second unicast connection is a unicast connection between the first terminal device and the second terminal device;
receiving, by the first terminal device, a first response message from the second terminal device, wherein the first response message indicates that the establishment of the second unicast connection is completed; and
remaining, by the first terminal device, in the active state until a radio resource control RRC message carrying an initial DRX configuration is received or a connection establishment procedure is stopped by the upper layer.

4. The method according to claim 3, wherein
the second request message is before the first request message.

5. The method according to any one of claims 1 to 4, wherein
the first message comprises any one of the following:
a second response message forwarded by the second terminal device, wherein the second response message indicates that the establishment of the first unicast connection is completed;
or
a first radio resource control RRC message from the second terminal device, wherein the first RRC message carries DRX configuration information of the second unicast connection;
or
a second RRC message forwarded by the second terminal device, wherein the second RRC message carries service data adaptation protocol SDAP configuration information and packet data convergence protocol PDCP configuration information of the first unicast connection;
or
a measurement report from the second terminal device, wherein the measurement report comprises a channel busy ratio CBR of a third unicast connection, and the third unicast connection is a unicast connection between the second terminal device and the third terminal device;
or
a message that is from the second terminal device and that carries a quality of service QoS parameter.

6. The method according to any one of claims 1 to 5, wherein
the second message comprises any one of the following:
a third RRC message, wherein the third RRC message carries the service data adaptation protocol SDAP configuration information and the packet data convergence protocol PDCP configuration information of the first unicast connection;
or
a message carrying a QoS parameter;
or
a fourth RRC message, wherein the fourth RRC message carries a radio link control RLC bearer configuration of the second unicast connection.

7. The method according to any one of claims 1 to 6, wherein
the first request message is carried on a first channel, the first channel is associated with a first channel identifier, the first channel identifier is preset, the second request message is carried on a second channel, the second channel is associated with a second channel identifier, and the second channel identifier is preset.

8. A sidelink communication method, comprising:
receiving, by a second terminal device, a first request message from a first terminal device, wherein the first request message is used to request to establish a first unicast connection, and the first unicast connection is an end-to-end unicast connection between the first terminal device and a third terminal device;
forwarding, by the second terminal device, the first request message to the third terminal device; and
remaining, by the second terminal device, in a state that is before the receiving of the first request message;
or
remaining, by the second terminal device, in an active state until a first message is received, a second message is sent, or a connection establishment procedure is stopped by an upper layer.

9. The method according to claim 8, wherein remaining, by the second terminal device, in the state that is before the receiving of the first request message comprises: maintaining, by the second terminal device, a discontinuous reception DRX configuration maintained before the receiving of the first request message.

10. The method according to claim 8 or 9, wherein the method further comprises:
receiving, by the second terminal device, a second request message from the first terminal device, wherein the second request message is used to request to establish a second unicast connection, and the second unicast connection is a unicast connection between the first terminal device and the second terminal device;
sending, by the second terminal device, a first response message to the first terminal device, wherein the first response message indicates that the establishment of the second unicast connection is completed;
remaining, by the second terminal device, in the active state until an RRC message carrying an initial DRX configuration is received or a connection establishment procedure is stopped by the upper layer;
sending, by the second terminal device, a third request message to the third terminal device, wherein the third request message is used to request to establish a third unicast connection, and the third unicast connection is a unicast connection between the second terminal device and the third terminal device; and
receiving, by the second terminal device, a second response message from the third terminal device, wherein the second response message indicates that the establishment of the second unicast connection is completed.

11. The method according to claim 10, wherein
the second request message is before the first request message.

12. The method according to any one of claims 8 to 11, wherein
the first message comprises any one of the following:
a first radio resource control RRC message from the first terminal device, wherein the first RRC message carries discontinuous reception DRX configuration information of the second unicast connection;
or
a second RRC message from the third terminal device, wherein the second RRC message carries DRX configuration information of the third unicast connection;
or
a message that is from the first terminal device and that carries a QoS parameter of the second unicast connection;
or
a message that is from the third terminal device and that carries a QoS parameter of the third unicast connection.

13. The method according to any one of claims 8 to 12, wherein
the second message comprises any one of the following:
a measurement report, wherein the measurement report is a channel busy ratio CBR of the third unicast connection;
or
a message carrying a QoS parameter;
or
a third RRC message, wherein the third RRC message carries a radio link control RLC bearer configuration of the second unicast connection.

14. The method according to any one of claims 8 to 13, wherein
the first request message is carried on a first channel, the first channel is associated with a first channel identifier, the first channel identifier is preset, the third request message is carried on a second channel, the second channel is associated with a second channel identifier, and the second channel identifier is preset.

15. A sidelink communication method, comprising:
receiving, by a third terminal device, a first request message from a second terminal device, wherein the first request message is used to request to establish a first unicast connection, and the first unicast connection is an end-to-end unicast connection between a first terminal device and the third terminal device; and
remaining, by the third terminal device, in a state that is before the receiving of the first request message;
or
remaining, by the third terminal device, in an active state until a first message is received, a second message is sent, or a connection establishment procedure is stopped by an upper layer.

16. The method according to claim 15, wherein
remaining, by the third terminal device, in the state that is before the receiving of the first request message comprises: maintaining, by the third terminal device, a discontinuous reception DRX configuration maintained before the receiving of the first request message.

17. The method according to claim 15 or 16, wherein the method further comprises:
receiving, by the third terminal device, a second request message from the second terminal device, wherein the second request message is used to request to establish a second unicast connection, and the second unicast connection is a unicast connection between the first terminal device and the second terminal device;
sending, by the third terminal device, a first response message to the second terminal device, wherein the first response message indicates that the establishment of the second unicast connection is completed; and
remaining, by the third terminal device, in the active state until an RRC message carrying an initial DRX configuration is received or a connection establishment procedure is stopped by the upper layer.

18. The method according to claim 17, wherein
the second request message is before the first request message.

19. The method according to any one of claims 15 to 18, wherein
the first message comprises any one of the following:
a first radio resource control RRC message from the second terminal device, wherein the first RRC message carries discontinuous reception DRX configuration information of the second unicast connection;
or
a second RRC message forwarded by the second terminal device, wherein the second RRC message carries service data adaptation protocol SDAP configuration information and packet data convergence protocol PDCP configuration information of the first unicast connection;
or
a measurement report from the second terminal device, wherein the measurement report is a channel busy ratio CBR of a third unicast connection, and the third unicast connection is a unicast connection between the first terminal device and the second terminal device;
or
a message that is from the second terminal device and that carries a QoS parameter.

20. The method according to any one of claims 15 to 19, wherein
the second message comprises any one of the following:
a second response message, wherein the second response message indicates that the establishment of the first unicast connection is completed;
or
a third RRC message, wherein the third RRC message carries the service data adaptation protocol SDAP configuration information and the packet data convergence protocol PDCP configuration information of the first unicast connection;
or
a message carrying a QoS parameter;
or
a fourth RRC message, wherein the fourth RRC message carries a radio link control RLC bearer configuration of the second unicast connection.

21. The method according to any one of claims 15 to 20, wherein
the first request message is carried on a first channel, the first channel is associated with a first channel identifier, the first channel identifier is preset, the second request message is carried on a second channel, the second channel is associated with a second channel identifier, and the second channel identifier is preset.

22. A communication apparatus, comprising a module or unit configured to perform the method according to any one of claims 1 to 18.

23. A communication apparatus, comprising a processor, wherein the processor is configured to execute a computer program or instructions stored in a memory, to enable the apparatus to perform the method according to any one of claims 1 to 18.

24. The apparatus according to claim 23, wherein the apparatus further comprises the memory and/or a communication interface, wherein the communication interface is coupled to the processor, and
the communication interface is configured to input and/or output information.

25. A computer-readable storage medium, wherein the computer-readable storage medium stores a computer program or instructions, and when the computer program or the instructions are run on a communication apparatus, the communication apparatus is enabled to perform the method according to any one of claims 1 to 18.

26. A computer program product, wherein the computer program product comprises a computer program or instructions used to perform the method according to any one of claims 1 to 21.

27. A communication system, comprising a first terminal device, a second terminal device, and a third terminal device, wherein
the first terminal device is configured to perform the method according to any one of claims 1 to 7, the second terminal device is configured to perform the method according to any one of claims 8 to 14, and the third terminal device is configured to perform the method according to any one of claims 15 to 21.
